# FASCICULE DE BREVET EUROPEEN

(11) **EP 1 694 481 B1**
(45) Date de publication et mention de la délivrance du brevet: **27.01.2010**
(21) Numéro de dépôt: 04791545.9
(22) Date de dépôt: 15.10.2004
(51) Int. Cl.: B29B 17/02

(54) **PROCEDE DE SEPARATION SELECTIVE DE MATERIAUX ORGANIQUES USAGES FRAGMENTES AU MOYEN DE SUSPENSIONS AQUEUSES DENSES**
VERFAHREN ZUM GEZIELTEN TRENNEN VON VERBRAUCHTEN ZERKLEINERTEN ORGANISCHEN MATERIALIEN MITTELS DICHTER WÄSSRIGER SUSPENSIONEN
METHOD FOR SELECTIVELY SEPARATING USED COMMINUTE ORGANIC MATERIALS BY MEANS OF DENSE AQUEOUS SUSPENSIONS

(30) Priorité: 15.10.2003 FR 0312031
(43) Date de publication de la demande: 30.08.2006
(73) Titulaire: Galloo Plastics (S.A.), 59250 Halluin (FR)
(72) Inventeur: De FERAUDY, Hugues, F-69220 Charantay (FR); SEINERA, Henri, F-69600 Oullins (FR)
(74) Mandataire: Gaucherand, Michel
(86) Numéro de dépôt international: PCT/FR2004/002634
(87) Numéro de publication internationale: WO 2005/037438

(56) Documents cités:
- DE-A- 4 309 716
- DE-C- 4 335 570
- GB-A- 1 543 770
- US-A- 5 738 222
- US-A1- 2004 035 757
- US-B1- 6 335 376
- US-B1- 6 460 788

## Description

### Domaine de l'invention

L'invention concerne un procédé de séparation sélective de matériaux organiques de synthèse en mélange, tels que des polymères et/ou des copolymères chargés ou non, qui sont des déchets en particulier usagés à recycler pour les valoriser, ces matériaux organiques de synthèse étant issus de la destruction par broyage d'automobiles et de biens de consommation durables parvenus en fin de vie, ledit procédé de séparation sélective agissant par séparation de ces matériaux à un seuil de densité choisi dans un milieu dense formé de suspensions liquides séparatives fluides composées de particules pulvérulentes dispersées dans une phase aqueuse, ces suspensions étant stabilisées à la valeur seuil de densité choisie pour provoquer la séparation sélective d'une fraction déterminée du mélange des matériaux usagés à séparer.

Les matériaux organiques de synthèse usagés concernés proviennent généralement de résidus de broyage automobile et de biens de consommation durables, arrivés en fin de vie, dans lesquels une multiplicité de types de matériaux organiques de synthèse, que sont les polymères et/ou des copolymères chargés ou non, ignifugés ou non, adjuvantés ou non, sont à considérer comme valorisables et dans lesquels une multiplicité d'autres matériaux sont considérés comme des contaminants gênants tels que des métaux, des minéraux et autres contaminants divers qui doivent être préalablement éliminés. D'autres déchets, tels que des déchets industriels mélangés contenant des matériaux organiques de synthèse et des déchets d'emballage tels que des polymères et/ou copolymères en provenance de collectes municipales et contenant également des matériaux polymères mélangés peuvent être tout autant considérés comme potentiellement valorisables.

Dans les industries de recyclage de matériaux organiques de synthèse usagés à valoriser, sont pratiqués divers procédés de séparation des constituants des flux, plus ou moins polluants et plus ou moins pollués, plus ou moins concentrés en matériaux organiques de synthèse valorisables qu'il faut séparer des polluants, concentrer et trier par flux homogènes de types de matériaux organiques de synthèse présents, tels que par exemple polyéthylène, polypropylène, polystyrène, (PS), copolymère acrylonitrile-butadiene-styrène, (ABS), polyamides (PA), chlorure de polyvinyle (PVC), polyesters, polyuréthane, polycarbonate, copolymères acryliques ou métacryliques ou autres, tous les polymères pouvant être chargés, adjuvantés, ignifugés ou non.

Ces procédés connus permettent actuellement d'extraire et de séparer des flux à traiter, constitués de mélanges de matériaux organiques de synthèse à valoriser et de matériaux contaminants à éliminer, ces flux comprenant :
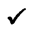 une phase de matériaux organiques de synthèse de densité inférieure à 1,
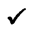 une phase de matériaux organiques de synthèse de densité supérieure ou égale à 1,
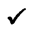 une phase de matériaux organiques de synthèse, formée par exemple de mousses de polyéthylène, de polyuréthane, de déchets de films, de fils ou autres,
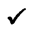 une phase de matériaux contaminants à éliminer dont les constituants ne sont pas valorisables dans de tels procédés de séparation et de valorisation, par exemple du sable, des débris de verre, des débris de bois, des restes de métaux ou autres.

L'un de ces procédés de séparation de matériaux polymères de tous types provenant de broyage de véhicules automobiles et/ou d'autres objets en fin de vie (décrit dans le brevet européen EP 0918606 B), consiste, après une étape de broyage assurant la fragmentation des matériaux organiques de synthèse, préférentiellement à effectuer une séparation mécanique par facteur de forme, suivie d'une première étape de séparation par densité qui provoque la séparation de tous les matériaux organiques de synthèse à valoriser en deux flux :
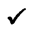 l'un de densité inférieure à 1, comprenant notamment et par exemple les polyoléfines non chargées, telles que les polyéthylènes (d=0,92 à 0,95), les polypropylènes (d autour de 0,9), les copolymères d'éthylène et de vinylacétate, les copolymères d'éthylène-propylène caoutchouc (E.P.R.), les copolymères d'éthylène-propylène-diène-monomère (E.P.D.M.), les mousses de polyéthylène (PE), de polypropylène (PP), de polyuréthane (PU) ou autres,
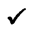 l'autre, de densité supérieure ou égale à 1, comprenant notamment et par exemple :
   - du Polystyrène : PS non chargé (d autour de 1,05)
   - des copolymères acrylonitrile-butadiene-styrène : ABS non chargé (d environ 1,07)
   - des chlorures de polyvinyle : PVC rigide non chargé (d autour de 1,30 à 1,40) et chargé (d autour de 1,40 à 1,55), plastifiés tels que plastisol et mousses de PVC
   - des polycarbonates : PC non chargé, de densité d=1,20 à 1,24,PC chargé à 20% de fibres de verre de densité d=1,3 ou encore PC chargé à 30% de fibres de verre de densité d=1,44
   - des caoutchoucs thermoplastiques, sauf les caoutchoucs alvérolaires thermodurcissables
   - des polyuréthanes : PU chargés (d=1,21 environ)
   - des polypropylènes chargés Talc (PP Talc chargé entre 5% et 40% en talc)
   - des polyéthylènes chargés : (PE chargés entre 2% et 40% de charges
   - des polyesters insaturés (d allant de environ 1,10 à 1,13)
   - des polyesters saturés (d ≥ 1,20), chargés ou non (souvent chargés en fibres de verre)
   - des polyamides : PA₆ (d=1,13) , PA_{6,6} (d=1,14), PA_{6.10} (d=1,08), PA₁₁ (d=1,04), PA₁₂ (d=1,02), chargés ou non chargés
   - des poly méthacrylates de méthyle : PMMA (d=1,18)
   - autres.

Ces deux flux sont ultérieurement traités pour en extraire chaque composant, les séparer selon des flux homogènes et les traiter pour en faire des granulés formulés, directement utilisables selon les procédés de la plasturgie.

Si le flux du mélange de matériaux organiques de synthèse valorisables de densité inférieure à 1 est efficacement traité par une succession d'étapes de séparation en milieu aqueux par des bains de densité adaptée, permettant une sélection fine des divers composés polymères présents dans ledit flux, il n'en est pas de même du flux du mélange des matériaux organiques de densité supérieure ou égale à 1 dont les divers matériaux organiques de synthèse s'avèrent difficilement séparables.

Pour ce deuxième flux, en effet, qui se compose d'un mélange de polymère, et/ou copolymères chargés ou non, dont les densités s'étalent de 1 à environ 1,6, la séparation des divers matériaux organiques de synthèse présents dans le mélange s'effectue par densité dans des séparateurs hydrauliques dont le milieu liquide de séparation est formé d'eau, d'agents tensio-actifs, et de composés minéraux tels que des argiles et en particulier de la bentonite et éventuellement des composés solubles dans l'eau tels que des sels minéraux, composés mis en oeuvre pour augmenter la densité de la phase liquide et la porter à une valeur de densité permettant en principe une séparation des divers matériaux organiques de synthèse en deux phases distinctes, l'une surnageant et l'autre décantant dans le fond du séparateur, chaque phase formant un nouveau flux soumis à son tour à une nouvelle séparation par densité.

Toutefois, il se révèle à l'usage, en particulier dans des installations de séparation par densité, en service dans des ensembles industriels de traitement de matériaux organiques de synthèse usagés à valoriser, que les milieux liquides de séparation ne sont pas suffisamment stables pour permettre des séparations sélectives pointues par densité, c'est-à-dire procurant des séparations très homogènes en types de matériaux triés, les flux provenant de la séparation pouvant être des mélanges de plusieurs matériaux dont les densités respectives sont très proches les unes des autres.

Il a été en effet observé divers phénomènes particulièrement gênants se développant au sein de ces milieux liquides de séparation par densité ; ces phénomènes gênants, qui sont de réels inconvénients, pouvant être :
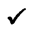 une évolution de la rhéologie desdits milieux liquides qui se manifeste par une variation perturbante de leur viscosité vers un état plus fluide ou plus pâteux,
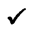 une dérive ou une variation de la densité apparente des milieux liquides, la densité ne pouvant rester stable au niveau seuil initialement choisi pour une bonne séparation des matériaux organiques de synthèse usagés à valoriser, cette dérive (variation) provoquant une évolution de la composition des flux séparés par un milieu liquide dense,
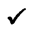 une décantation dans le temps d'une partie des composés minéraux dispersés dans le milieu aqueux pour créer la densité choisie, en partie à l'origine de l'évolution de la densité du milieu liquide de séparation,
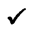 une quasi-impossibilité de pouvoir séparer finement des matériaux organiques de synthèse usagés à valoriser, chargés ou non, dès lors que la séparation par densité des uns et des autres matériaux doit se faire sur une différence de densité Δ=|0,01|, c'est-à-dire dans un intervalle autour de la densité choisie "ds" de ds +/-0,005.

Il existe dès lors un problème certain et important quant à la séparation par densité très fine des matériaux organiques de synthèse usagés à valoriser tels que sont des polymères et/ou copolymères chargés ou non qui sont des déchets usagés à recycler, issus de la destruction par broyage d'automobiles et de biens de consommation durables parvenus en fin de vie, pour obtenir des flux homogènes de matériaux séparés, sans qu'il y ait de dérive de la densité et mélange de matériaux sélectionnés.

### Etat de la technique

Séparer le mieux possible des uns des autres des matériaux solides difficilement séparables, de densité au moins égale à 1 et généralement très supérieure, en un milieu liquide dense, a fait l'objet de nombreux travaux de recherche et d'applications industrielles.

Le milieu liquide dense de l'état de la technique, de densité généralement supérieure à 1, est formé d'une phase aqueuse dans laquelle :
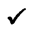 peuvent être dissouts des sels minéraux solubles pour augmenter la densité réelle de la phase aqueuse jusqu'à une valeur de densité souhaitée,
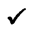 peuvent être dispersées des argiles pulvérulentes pour créer une suspension de densité apparente jusqu'à obtenir la densité souhaitée,
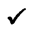 peuvent être combinés les deux moyens précités que sont les solubilisations de sels augmentant la densité de la phase aqueuse et la dispersion des argiles dans la phase aqueuse à densité augmentée, pour augmenter, dans la limité du possible, la stabilité de la suspension des argiles dans la phase aqueuse densifiée.

Dans le cas, par exemple, du traitement de minerais, les procédés de densité pratiqués consistent à séparer les minerais de leur gangue, après une action mécanique de broyage à la maille de libération, dans une suspension aqueuse d'argile pulvérulente dispersée, l'argile agissant en tant qu'agent densifiant, à la concentration adéquate pour permettre la séparation des composants à séparer en deux phases, l'une surnageante et l'autre décantant.

Toutefois, aux concentrations d'argile mise en oeuvre pour préparer les suspensions densifiées de séparation, la stabilité desdites suspensions est toute relative car les concentrations en argile peuvent évoluer dans le temps, selon l'évolution de la composition de la gangue présente à éliminer dont la densité n'est pas stable et varie selon la zone d'extraction de même que la densité du minerai à extraire.

Dans ces procédés, le seuil de densité choisi pour la séparation est relativement grossier et ne peut attendre habituellement en sensibilité de séparation le premier chiffre après la virgule, c'est-à-dire par exemple un milieu de séparation densifié dont la densité apparente sera comprise entre 1,4 et 1,5.

Dans le cas, par exemple, des matériaux organiques de synthèse usagés à valoriser que sont les matériaux polymères fragmentés à séparer entre eux ou à séparer de leurs polluants, sont pratiqués des procédés de séparation par milieux liquides denses, utilisant la solubilisation de sels minéraux dans la phase aqueuse ou la dispersion d'argiles pulvérulentes en quantité adéquate pour établir la densité seuil du partage en présence d'agents tensio-actifs.

Des documents ont décrit de tels milieux denses liquides de séparation. Un premier document (DE19964175) décrit une technologie permettant la séparation d'un mélange hétérogène de matériaux polymères fragmentés, selon leur densité apparente, dans une solution aqueuse saline constituant le milieu liquide dense ayant une densité prédéterminée, la séparation s'effectuant selon un flux laminaire nécessitant une optimisation des conditions de débits de la solution aqueuse saline et du mélange de matériaux polymères à séparer.

Le procédé ainsi évoqué apparaît être plutôt adapté seulement à une valeur unique de densité, tant il semble difficile de faire évoluer la densité du milieu liquide dense selon un large éventail de valeurs, cette évolution étant liée au fait que pour parvenir à des densités relativement élevées, il est nécessaire de mettre en oeuvre des concentrations de plus en plus importantes en sels solubilisés ; ce procédé, dès lors, peut devenir d'un coût d'exploitation inacceptable pour séparer des matériaux organiques de synthèse usagés à valoriser de très faible valeur ajoutée, et ce d'autant plus que la technologie utilisée est soumise à une action corrosive évidente de la part du milieu liquide salin.

Un autre document (US 3,857,489) décrit un procédé de séparation d'un flux de matériaux à séparer dans un milieu aqueux dense fait d'une suspension d'argile pulvérulente, dispersée dans de l'eau dont la stabilité est améliorée grâce à l'ajout dans la suspension d'un agent (tensi-actif) stabilisant de l'argile de type hétéro polysaccharides hydrosolubles. Mais la stabilité de la suspension séparative n'est pas suffisamment acquise, un phénomène de décantation des particules d'argiles se produisant, qui provoque une variation importante du seuil de densité choisi pour la séparation sélective.

Un autre document (EP 0918 606 B1), tel qu'il a été précédemment évoqué, décrit un procédé de séparation de matériaux polymères fragmentés, provenant de broyage de véhicules automobiles et/ou autres objets en fin de vie qui pratique, sur un flux constitué d'un mélange de polymères et/ou copolymères chargés ou non, dont les densités s'étagent de 1 à 1,6, la séparation en milieu liquide dense mettant en oeuvre une suspension faite d'argile pulvérulente dispersée dans de l'eau, afin d'obtenir un milieu séparatif par densité à un seuil de densité choisi. Mais, comme il a été dit, une telle suspension séparative présente des inconvénients peu surmontables comme une variation de la rhéologie, de la densité dans le temps, une décantation de l'argile pulvérulente et une impossibilité de fixer un seuil de densité particulièrement fin portant par exemple sur le deuxième chiffre après la virgule et de l'y maintenir.

Un autre document (US 6 460 788 B1) décrit un procédé de séparation de toutes catégories de polymères provenant de déchets, comprenant une étape de broyage, une étape de séparation mécanique et deux phases de séparation par densité dans lesquelles la densité varie dans un sens croissant ou dans un sens décroissant.

Dans la phase de séparation par densité, le milieu liquide du séparateur hydraulique contient une phase aqueuse, un composé inorganique pulvérulent, qui est de l'argile, mis en suspension pour augmenter la densité de l'eau et un agent mouillant (à base d'alcool gras modifié avec de l'oxyde d'éthylène et/ou de l'oxyde de propylène) qui permet aussi de maintenir le composé inorganique en suspension. Selon ce procédé de séparation, le dimensionnement des particules en suspension n'est jamais évoqué ni à travers une coupe granulometrique ni par l'intermédiaire d'une dimension médiane de ces particules: cette absence de précision se révèle être particulièrement préjudiciable pour la stabilité de la suspension et plus particulièrement pour la stabilité de la densité souhaitée pour cette suspension, en raison de l'évidente ségrégation des particules les plus grosses qui sédimentent dans le fond du conteneur.

Un autre document (US 6 335 376 B1) décrit une méthode de séparation des polymères présents dans un mélange de différents polymères, ne contenant ni métaux, ni polluants à éliminer tels que verre, mousse, bois ou autres. La méthode revendiquée consiste à chauffer le mélange de ces différents polymères après une sélection dimensionnelle, pour provoquer le bullage d'au moins l'un des polymères dudit mélange à séparer et à le séparer dudit mélange grâce à un changement de la densité apparente dudit polymère, provoqué par le chauffage.

Cette modification de la densité apparente provoque une différentiation entre l'un au moins des polymères du mélange chauffé et les autres polymères du mélange et une séparation sélective par étapes successives d'altérations des densités de chaque polymère.

Dés lors, ce procédé utilise des moyens de séparation particuliers qui ne mettent pas en oeuvre une suspension aqueuse de particules solides pulvérulentes pour créer un niveau de densité de séparation, mais un moyen thermique qui provoque l'amorce d'une déstructuration des matériaux polymères à séparer.

Un autre document (WO-A-98/03318) décrit un procédé de séparation par densité d'un mélange de matériaux polymères (PS, PP chargé talc à 10% - 20% et ABS) dans un séparateur hydraulique, dans lequel la densité est sensiblement fixée sur une valeur.

Le milieu liquide dense du séparateur hydraulique est formé d'une phase aqueuse, d'argile de carrière mise en suspension dans la phase aqueuse, pour procurer au milieu liquide de séparation la densité sensiblement fixée sur la valeur et d'un agent mouillant susceptible de maintenir l'argile en suspension dans la phase aqueuse. Toutefois, le dimensionnement des particules d'argile à mettre en suspension dans la phase aqueuse n'est pas évoqué dans ce document, ni à travers une coupe granulométrique, ni à travers une dimension médiane de ces particules. Cette méconnaissance de ces paramètres pour la création de suspension aqueuse dense d'argile conduit à la formation de suspensions aqueuses d'argiles instables dans le temps, instabilité qui se manifeste par la sédimentation de l'argile entraînant une dérive de la densité du milieu aqueux de séparation et une mauvaise séparation des fragments des polymères en mélange.

Un autre procédé de séparation de polymères provenant de déchets broyés est connu du document DE A 335570 C1.

Ainsi, l'état de la technique propose divers procédés de séparation de matériaux à séparer, tels ceux résultant du broyage de véhicules et/ou de biens de consommation durables en fin de vie comme l'électroménager, les matériels électroniques ou autres qui, après la récupération des métaux, sont des matériaux organiques de synthèse, en mettant en oeuvre des milieux denses liquides, avec tous les inconvénients évoqués précédemment.

Mais l'état de la technique ne propose pas de procédés de séparation particulièrement fine des divers types de constituants, de densité au moins égale à 1 et généralement très supérieure à 1, formant un mélange de matériaux organiques de synthèse usagés et à valoriser, se présentant sous un aspect fragmentaire.

### Objectifs de l'invention

Le problème industriel qui se pose au terme de l'examen de l'état de la technique et qui apparaît encore insoluble à travers cet état de la technique est de réaliser un procédé et une installation correspondants de séparation fine par différence de densité. Un tel procédé de séparation fine peut être obtenu au moyen d'un milieu liquide dense de mélanges complexes de matériaux de synthèse organiques usagés de tous types, à séparer type par type, ayant chacun une densité au moins égale à 1, en vue de les valoriser par recyclage, tous ces matériaux étant des polymères et/ou copolymères thermoplastiques ou thermodurs, chargés ou non.

A titre d'exemples peuvent être cités tous les thermoplastiques tels que polyoléfines et copolymères oléfiniques, PVC et dérivés, polystyrène et ses copolymères, dérivés cellulosiques, polyamides, polymères acryliques et autres..., mais aussi les thermodurcissables tels que polyesters insaturés, polyuréthanes réticulés, phénoplastes, aminoplastes, résines époxydes et autres... et tous les polymères spéciaux tels que polycarbonate, polyimides, polyuréthanes linéaires, polyesters saturés, silicones, polymères fluorés ou autre, les élastomères de synthèse et autres..., ces divers type, qui sont des déchets usagés à recycler pour les valoriser. De tels matériaux organiques à valoriser sont issus de la destruction par broyage d'automobiles et de biens de consommation durables en fin de vie, par densité à un seuil de densité choisi "ds" pour provoquer leur séparation, la séparation s'effectuant dans un milieu liquide dense formé de suspensions séparatives stables composées de particules pulvérulentes dispersées dans une phase aqueuse.

D'autres objets de l'invention sont de créer un procédé et une installation industrielle permettant de réaliser la séparation sélective des matériaux précités, par densité, grâce auxquels :
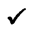 la rhéologie des suspensions séparatives reste stable et ne subit aucune déviance se manifestant par une fluidisation ou un épaississement du milieu liquide dense,
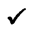 la densité apparente "ds" établie pour chaque suspension séparative ne subit aucune dérive par effet de déstabilisation de la suspension dans le temps provoquant la décantation de particules pulvérulentes initialement dispersées en plus ou moins grande quantité,
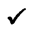 la quasi-totalité au moins des particules pulvérulentes participent activement et effectivement à la création de la densité apparente des suspensions séparatives en raison de leur homogénéité dimensionnelle, sans qu'il soit nécessaire d'éliminer au fur et à mesure des particules sédimentant dans le milieu liquide dense, parce que dimensionnellement trop grandes et dès lors trop lourdes,
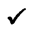 la séparation sélective et fine des divers matériaux organiques de synthèse constitutifs d'un mélange à trier dont la sensibilité de tri d'un matériau à un autre peut atteindre un différentiel de Δ=|0,001| ou encore la valeur de la densité ciblée "ds" à ±0,0005.

### Exposé sommaire de l'invention

Selon les divers objets précédemment énoncés, le procédé de séparation sélective par densité de matériaux organiques de synthèse usagés et à recycler pour les valoriser, de densité au moins égale à 1, issus de la destruction par broyage de bien durables parvenus en fin de vie, tels que des véhicules automobiles, le matériel électroménager, le matériel électronique, permet l'élimination des inconvénients décelés dans l'état de la technique et l'apport, simultanément, de substantielles améliorations par rapport aux moyens antérieurement décrits.

Selon l'invention, le procédé de séparation sélective de chacun des constituants d'un mélange de matériaux organiques de synthèse, en particulier usagés et à valoriser par recyclage, de densité au moins égale à 1, se présentant sous une forme fragmentée, consistant à effectuer leur séparation par l'introduction dudit mélange dans un milieu liquide dense, qui est une suspension aqueuse de particules pulvérulentes dispersées en quantité adéquate dans une phase aqueuse, pour créer un niveau de densité "ds" choisi comme seuil de séparation des divers matériaux organiques de synthèse fragmentés à séparer sélectivement par type, caractérisé en ce que ladite suspension séparative est rendue sélective, stable et invariante en densité à un niveau de précision de ±0,0005 par rapport au seuil de densité "ds" choisi pour la séparation sélective lorsqu'elle est formée :
a) de particules pulvérulentes de coupe granulométrique d'au plus 30 µm, préférentiellement d'au plus 20 µm, et très préférentiellement d'au plus 5 µm ces particules solides pulvérulentes ainsi dimensionnées étant dispersées et présentes dans la phase aqueuse en quantité suffisante pour atteindre le seuil de densité "ds" choisi,
b) d'un agent hydrosoluble de stabilisation des caractéristiques rhéologiques et d'invariance de la densité apparente "ds" à un niveau de précision de ±0,0005 par rapport à ladite densité "ds", de la suspension de particules solides pulvérulentes
c) d'une phase aqueuse.

### Description détaillée de l'invention

Le procédé de séparation sélective de mélange de matériaux organiques de synthèse usagés s'appliquant à tous les matériaux polymères et/ou copolymères, mélangés et fragmentés, chargés ou non, que l'on cherche à valoriser, qu'ils soient d'origine thermoplastique et/ou thermodure.

Selon le procédé de l'invention, les particules pulvérulentes mises en oeuvre dans la formation de la suspension aqueuse de séparation fine des divers types de matériaux organiques de synthèse usagés à valoriser, se présentant sous la forme d'un mélange de matériaux fragmentés, sont sélectionnés de telle sorte que :
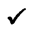 la rhéologie reste stable dans le temps, c'est-à-dire exempte de variation significative de son état vers un état plus fluide ou plus dense,
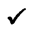 la densité apparente "ds" choisie comme le seuil de séparation fine et d'extraction d'un type de matériau organique de synthèse usagé du mélange de matériaux usagés le contenant atteigne et conserve cette valeur de densité apparente "ds" avec une précision ciblée dans l'intervalle "ds ±0,0005" donnant ainsi une sensibilité de tri par densité d'un matériau à un autre matériau.

Les particules pulvérulentes mises en oeuvre selon l'invention peuvent être d'origine naturelle ou synthétique.

Quand les particules pulvérulentes sont d'origine naturelle, elles peuvent être choisies dans le groupe des matériaux minéraux pulvérulents constitué par les argiles, susceptibles de former une suspension plastique stable au contact de l'eau, qui peuvent appartenir aux groupes constitués par le groupe des kaolinites, telles que par exemple la kaolinite, la dickite, l'halloysite, les kaolinites désordonnées, les serpentines ; le groupe des micas, tels que par exemple muscovite, biotite et paragonite, la pyrophyllite et le talc, les illites et la glauconite ; le groupe des montmorillonites, telles que par exemple le beidéllite, la stévensite, la saponite, et l'hectorite ; le groupe des chlorites ; le groupe des vermiculites ; le groupe des argiles interstratifiées dont la structure unitaire est une combinaison des groupes précédents ; le groupe des argiles fibreuses, telles que par exemple l'attapulgite (palygorskite), la sépiolite ; ou encore le groupe formé par le carbonate de calcium (la calcite), le carbonate de magnésium, la dolomie (carbonate double de calcium et de magnésium), le sulfate de calcium dihydraté (gypse), le sulfate de baryum, le talc, l'alumine, la silice, le dioxyde de titane, la zircone, pris seuls ou en mélange.

Quand les particules pulvérulentes sont d'origine synthétique, elles peuvent être sélectionnées dans le groupe constitué par les poudres de verre, le carbonate de calcium précipité, les poudres métalliques, pris seuls ou en mélange.

Pour créer les conditions d'une suspension stable par leur dispersion dans la phase aqueuse, lesdites particules pulvérulentes mises en oeuvre selon l'invention doivent avoir une coupe granulométrique d'au plus 30 µm préférentiellement d'au plus 20 µm et très préférentiellement d'au plus 5 µm.

En outre, ces particules pulvérulentes peuvent avoir un diamètre médian d'au plus 5 µm et préférentiellement compris entre 1 µm et 0,005 µm.

Pour affiner encore le seuil de séparation au niveau de densité "ds" choisi, il est possible de réaliser le mélange de plusieurs coupes granulométriques d'un seul composé pulvérulent tel que du carbonate de calcium, ou de plusieurs composés pulvérulents tels que du carbonate de calcium et du kaolin.

De même, pour affiner encore le seuil de séparation au niveau de densité "ds" choisi, il est possible de mettre en oeuvre des particules pulvérulentes dont les dimensions diamétrales sont majoritairement sélectionnées à l'intérieur des limites préconisées dans le cadre de l'invention, au moyen d'un tri sélectif.

Quand les caractéristiques dimensionnelles des particules pulvérulentes sont au-delà des valeurs limites précédemment énoncées, il apparaît manifeste que les suspensions séparatives denses obtenues par leur dispersion dans la phase aqueuse conduisent à des phénomènes de sédimentation, d'instabilité des caractéristiques et de déviation du seuil "ds" ciblé, pour assurer la séparation fine souhaitée des matériaux organiques de synthèse usagés.

La quantité pondérale des particules pulvérulentes dispersées dans la phase aqueuse est dépendante du seuil de densité "ds" choisi pour réaliser la séparation fine d'un type de matériaux polymères usagé de densité généralement supérieure à 1, d'un mélange de matériaux usagés le contenant.

Pour séparer, par exemple, du polystyrène (PS) non chargé dont la densité est de 1,05, d'un copolymère d'acrylonitrile-butadiene-styrène (ABS) non chargé de densité 1,07, la quantité de particules pulvérulentes (CaCO3 broyé) est de 99 g par litre de phase aqueuse pour créer un milieu de densité séparative fine de ces deux matériaux, qui a une densité "ds" exactement égale à 1,06.

Selon le procédé de l'invention, l'agent hydrosolubles de stabilisation des caractéristiques rhéologiques et d'invariance de la densité apparente "ds" à un niveau de précision de ±0,0005 par rapport à ladite densité "ds" de la suspension de particules solides pulvérulentes, est choisi dans le groupe constitué par les agents hydrosolubles de stabilisation connus tels que par exemple les phosphates et polyphosphates, les esters alkylphosphates, alkylphosphonate, alkylsulphate, alkylsulfonate qui provoquent une défloculation des argiles colloïdales et permettant l'usage d'une suspension de forte densité et de faible viscosité, la lignine, les lignosulfonates sous forme de sels de calcium, de sodium, de fer, de chrome, de fer et de chrome, les copolymères d'anhydride maléique et d'acide styrène sulfonique, les copolymères de méthylacrylamide et d'acide (méthyl) acrylique substitués, neutralisés, estérifiés ou non, les copolymères, d'acide méthylacrylamido-alkyl sulfonique et de (méthyl)acrylamide, les polymères hydrosolubles d'acide acrylique mis en oeuvre sous la forme acide ou, éventuellement, neutralisé en tout ou en partie par des agents alcalin et/ou alcalino-terreux, par les amines et/ou salifiées par des ions monovalents et/ou polyvalents, et/ou estérifiées ou encore parmi les copolymères acryliques, hydrosolubles disposant d'un motif phosphaté, phosphoné, sulfaté, sulfoné.

Préférentiellement, ledit agent hydrosoluble peut être choisi parmi les copolymères acryliques hydrosolubles, dont certains seulement sont connus, répondant à la formule générale : 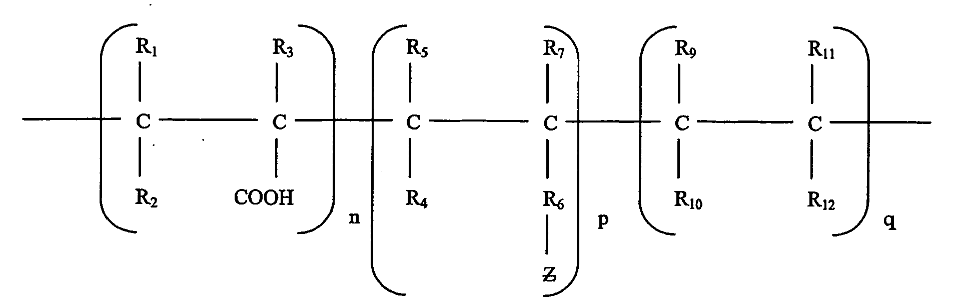 dans laquelle :
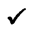 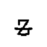 est un motif de type phosphate, phosphonate, sulfate, sulfonate, ayant au moins une fonction acide libre, toute autre fonction acide pouvant être occupée par un cation, un groupement ammonium, une amine, un alkyle en C₁ à C₃, un aryle en C₃ à C₆ substitué ou non, un alkylaryle, un ester en C₁ à C₁₂ de préférence en C₁ à C₃, ou un amide substitué.
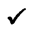 n prend une valeur comprise entre 0 et 95,
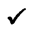 p prend une valeur comprise entre 95 et 5,
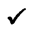 q prend une valeur comprise entre 0 et 95,
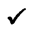 le cumul de n+p+q étant égal à 100, sachant que n et q peuvent être séparément nuls,
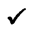 R₁ et R₂ peuvent être simultanément de l'hydrogène ou encore pendant que l'un est de l'hydrogène, l'autre peut être une fonction carboxylique estérifiée ou non par un alcool en C₁ à C₁₂ et de préférence en C₁ à C₄,
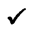 R₃ peut être de l'hydrogène ou un radical alkyl en C₁ à C₁₂ et de préférence en C₁ à C₄,
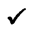 R₄ et R₅ peuvent être, simultanément ou non, de l'hydrogène ou un radical alkyl en C₁ à C₁₂, de préférence en C₁ à C₄, un aryle substitué ou non, une fonction carboxylique estérifiée ou non par un alcool en C₁ à C₁₂ et préférentiellement en C₁ à C₄,
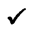 R₆ est un radical, qui établit le lien entre le motif et la chaîne polymérique, ce radical R₆ pouvant être un alkylène de formule (̵CH₂)̵ᵣ dans laquelle r peut prendre les valeurs de l'intervalle 1 à 12, un oxyde ou polyoxyde d'alkylène de formule (̵R₈-O)̵ₛ dans laquelle R₈ est un alkylène en C₁ à C₄ et s peut prendre les valeurs de 1 à 30, ou encore une combinaison des deux formules (̵CH₂)̵ᵣ et (̵R₈-O)̵ₛ,
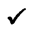 R₇ peut être de l'hydrogène ou un radical alkyl en C₁ à C₁₂, préférentiellement en C₁ à C₄,
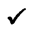 R₉ et R₁₀ peuvent être simultanément de l'hydrogène, ou encore pendant que l'un est de l'hydrogène, l'autre est un groupement carboxylique, un ester en en C₁ à C₁₂, préférentiellement en C₁ à C₃, un alkyle en C₁ à C₁₂, préférentiellement en C₁ à C₃, un aryle en C₅ ou C₆ ou un alkylaryle,
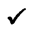 R₁₁ peut être de l'hydrogène, un groupement carboxylique, un alkyle en C₁ à C₃ ou un halogène,
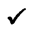 R₁₂ peut être un ester en C₁ à C₁₂, de préférence en C₁ à C₅, un amide substitué ou non, un alkyl en C₁ à C₁₂, de préférence en C₁ à C₃, un aryle en C₅ ou C₆, un alkylaryle, un halogène, un groupement carboxylique ou encore un groupement alkyle ou aryle, phosphaté, phosphoné, sulfaté, sulfoné.

La quantité pondérale de l'agent hydrosoluble de stabilisation s'exprime en % en poids sec/sec dudit agent par rapport à la quantité pondérale de particules pulvérulentes mises en suspension. Cette quantité pondérale dudit agent est comprise entre 0,02% et 5%, et préférentiellement entre 0,1% et 2% sec/sec par rapport à la quantité pondérale des particules pulvérulentes.

L'agent hydrosoluble de stabilisation est un copolymère dont la masse moléculaire est généralement comprise entre 5000 et 100000.

L'agent hydrosoluble de stabilisation se présente sous l'aspect d'une solution aqueuse du copolymère qui peut être ou non neutralisé, partiellement ou totalement, au moyen d'un agent de neutralisation choisi dans le groupe constitué par les hydroxydes de sodium, de potassium, d'ammonium, de calcium, de magnésium et les amines primaires, secondaires ou tertiaires, aliphatiques et/ou cycliques, telles que les mono, di, tri éthanolamines, les mono et diéthylamines, la cyclohexylamine, la méthylcyclohexylamine...

Selon le procédé de l'invention, la phase aqueuse est choisie parmi les eaux dont la conductivité est préférentiellement d'au plus 50 ms, et plus préférentiellement choisie parmi les eaux ayant une conductivité comprise entre 0,2 ms et 40 ms, étant entendu que l'unité de mesure en matière de conductivité est le SIEMENS et que les mesures des eaux mises en oeuvre se manifestent être à l'échelle de 10⁻³ Siemens, c'est-à-dire le millisiemens représenté par ms.

Le milieu aqueux mis en oeuvre peut être choisi dans le groupe constitué par des eaux aussi diverses que les eaux de source, les eaux alimentaires, les eaux industrielles traitées ou non, tournant en circuit fermé ou non, de l'eau de mer, sachant que la stabilité de la suspension est acquise au niveau de la densité seuil "ds" choisie pour effectuer une séparation fine quand les deux critères qui sont le dimensionnement des particules (a), et la présence d'un agent stabilisant hydrosoluble (b), sont réunis.

Selon l'invention, la préparation des suspensions stables de particules pulvérulentes dispersées en quantité adéquate dans une phase aqueuse pour créer un niveau de densité "ds" précis choisi comme seuil de séparation des divers matériaux organiques de synthèse usagés fragmentés à séparer sélectivement grâce à la précision de la densité du milieu de séparation, se fait sous agitation par l'introduction contrôlée des particules pulvérulentes en quantité déterminée pour parvenir au seuil de densité souhaité, et ce en présence de l'agent hydrosoluble de stabilisation.

Les suspensions stables de particules pulvérulentes selon l'invention,
- permettant la séparation fine et sélective de divers matériaux organiques de synthèse constitutifs d'un mélange à trier,
- dont la sensibilité au tri d'un matériau à un autre peut atteindre un différentiel Δ=|0,001|
- permettant de séparer avec efficacité des matériaux polymères en particulier usagés à séparer dont les densités se trouvent dispersées dans un intervalle allant de 1,000 à 1,600.

Toutefois, dans le cas de matériaux polymères en particulier usagés de densité rigoureusement identique mais de nature chimique différente, d'autres moyens de séparation opérant sur d'autres caractéristiques desdits matériaux ou d'autres comportements physico-chimiques sont à mettre en oeuvre pour achever ladite séparation sélective.

Selon l'invention, le procédé est mis en oeuvre dans une installation industrielle comportant au moins un séparateur hydraulique.

Par séparateur hydraulique, on entend définir des séparateurs statiques c'est-à-dire un dont la phase aqueuse est stagnante ou des séparateurs dynamiques dont la phase aqueuse est un flux actif pouvant être laminaire.

Dans le cas où l'installation industrielle comporte un seul séparateur hydraulique, il est possible de faire évoluer la densité "ds" choisie :
- dans le sens croissant, par ajout contrôlé des particules pulvérulentes définies et de l'agent hydrosoluble de stabilisation, dans la suspension présente dans le séparateur hydraulique, jusqu'à atteindre la nouvelle densité "ds" seuil choisie
- dans le sens décroissant par ajout d'eau jusqu'à atteindre la nouvelle densité "ds" seuil choisie.

L'évolution de la densité de la suspension stable séparative, dans un sens croissant ou décroissant, s'effectue sous une agitation mécanique du milieu aqueux dense en cours de correction et/ou sous recirculation du milieu dense par prélèvement dans le fond du séparateur hydraulique et réinjection au sommet dudit séparateur.

Dans le cas où l'installation industrielle comporte plusieurs séparateurs hydrauliques, les divers séparateurs sont placés les uns à la suite des autres, selon un système en cascade fonctionnant avec des suspensions stables ayant chacune un seuil de densité "ds" précis, dans un ordre croissant ou décroissant des densités.

Dans la conduite du procédé selon l'invention, la densité seuil "ds" de la suspension aqueuse de séparation fine est contrôlée en continu par des moyens de mesure appropriés et soumise à correction dès lors qu'une dérive est perçue.

Par exemple, et pour ce faire, chaque séparateur hydraulique, est piloté quant à la densité du milieu dense qu'il contient au moyen de deux électrovannes s'ouvrant chacune sur deux circuits connectés à deux réservoirs. L'un des réservoirs contient une suspension « mère » concentrée à environ 60% en particules pulvérulentes, stabilisée en agent hydrosoluble de stabilisation selon l'invention, permettant d'introduire une quantité déterminée de la suspension mère qui corrige vers le haut toute dérive vers un abaissement de la densité du milieu dense de séparation fine.

L'autre réservoir contient de l'eau permettant d'introduire une quantité déterminée qui corrige vers le bas toute dérive vers une augmentation de la densité du milieu dense de séparation fine.

La mesure de la densité du milieu dense de chaque séparateur hydraulique se fait en continu par des appareils de mesure adaptés qui déclenchent l'ouverture de l'une ou l'autre des électrovannes puis la fermeture dès lors que le niveau de densité seuil "ds" est atteint.

La conduite du procédé et la récupération des flux séparés sont tels qu'il n'est pas nécessaire de pratiquer une quelconque agitation. Toutefois, une recirculation de chaque suspension peut être réalisée dans chaque séparateur hydraulique par prélèvement de ladite suspension au fond dudit séparateur et réinjection dans la partie supérieure.

Les séparateurs hydrauliques ont des capacités de séparation de l'ordre de 1 à 10 tonnes à l'heure et opèrent en continu. Ils peuvent toutefois opérer par campagne, permettant alors de changer les valeurs des densités de coupure et de ne pas avoir impérativement besoin d'une cascade de plus de 3 ou 4 séparateurs hydrauliques. Dans ce cas, le milieu dense est fabriqué sur mesure pour chaque séparateur au regard de la campagne de séparation à mener.

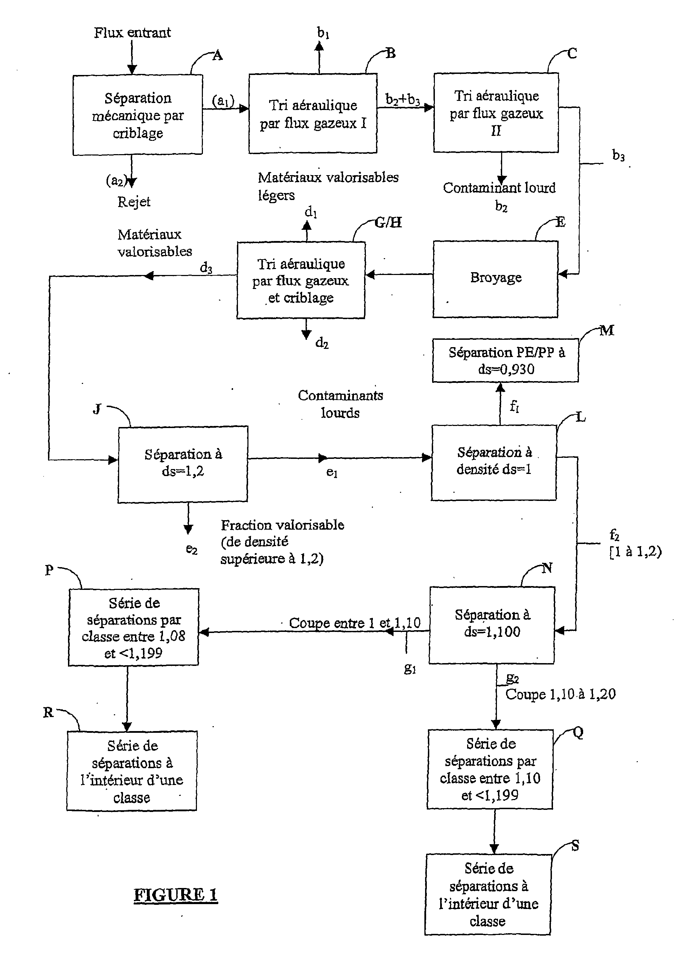

### Exemple 1 : (conforme à la figure 1)

Sur un site de broyage industriel de matériels électroménagers en fin de vie et après la séparation de la majeure partie des divers métaux à récupérer, un flux de -22,4 tonnes de matériaux valorisables issus de cette séparation formé d'un mélange de polymères de synthèse usagés à valoriser et de matériaux contaminants à éliminer est soumis à une phase de préconcentration afin de sélectionner dans ce mélange de matériaux polymères usagés à valoriser les matériaux polymères usagés appartenant à l'intervalle de densité allant de 1,000 à 1,200 à traiter selon l'invention, la borne inférieure étant incluse, la borne supérieure étant exclue.

La composition du flux de matériaux entrant dans la phase de préconcentration est donnée dans le tableau I ci-après.

**Tableau I :**

| **Matériaux** | **Composition broyée à la grille de 25 mm** | **Teneur en % en poids** |
|---|---|---|
| **Polymères** | PE, PP, PS, ABS, PP Talc, PVC,... | 65% en poids |
| | sous forme fragmentée | |
| **Caoutchouc et/ou élastomères** | Tous types de joints et/ou de gainages isolants de câbles électriques | 29% en poids |
| **Métaux** | Fragments de métaux ferreux mais surtout non ferreux : cuivre, aluminium.. | 6% en poids |

La préconcentration est effectuée sur le flux précité, et consiste à traiter le mélange des matériaux issus de broyage se présentant sous une forme fragmentée, pour en éliminer au moins pour partie les matériaux contaminant les matériaux valorisables. Ledit mélange à traiter comprenant :
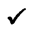 Une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
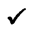 Des fractions de matériaux contaminants formés de matériaux métalliques et/ou de matériaux organiques autres que les matériaux polymères non expansés et/ou des matériaux polymères de synthèse dans un état expansé, comporte les étapes suivantes de traitement :
   a) Une première étape de séparation mécanique en (A) par criblage et/ou facteur de forme pour extraire au moins pour partie du mélange des matériaux fragmentés, la fraction des matériaux contaminants. Les mailles de crible étaient de 0-4 mm et on a retiré 0,04 tonnes de matériaux contaminants représentant 0,18% en poids du flux entrant.
   b) Une étape de séparation aéraulique, par flux gazeux, comportant une entrée du mélange de matériaux provenant de l'étape a) et trois sorties pour l'extraction de fractions de matériaux séparés dont la première fraction (b₁) consiste en une fraction de matériaux polymères de synthèse ultra légers et/ou expansés, la deuxième fraction (b₂) consiste en une fraction de matériaux lourds présents dans le mélange et la troisième fraction (b₃) consiste en une fraction des matériaux polymères de synthèse à valoriser se présentant sous une forme fragmentée allant d'un état rigide à un état souple. Pour ce faire, le flux de matériaux provenant de l'étape a), débarrassé au moins pour partie de la fraction des matériaux contaminants, a été soumise à une séparation par tri aéraulique dans deux séparateurs (B) et (C) couplés.
      Dans le premier séparateur aéraulique (B), la fraction (b₁) représentant 0,52 tonnes de matériaux dits légers a été traitée par aspiration et les fractions b₂ et b₃ extraites par le fond du séparateur aéraulique (B) et représentant 21,84 tonnes de matériaux dits lourds ont été recueillies pour être traitées dans le séparateur aéraulique (C). La fraction (b₁) représente 2,32% en poids de légers éliminés par rapport au flux entrant.
      Le mélange des fractions (b₂) + (b₃) représente 97,5% en poids de matériaux lourds.
      Le mélange des fractions (b₂) et (b₃) représentant 20,84 tonnes a été introduit dans le deuxième séparateur de tri aéraulique (C). La fraction (b₂) constituée de matériaux contaminants tels que des métaux,... représentant une masse de 2,82 tonnes, est extraite par le fond du séparateur aéraulique (C).
      La fraction (b₃), également extraite du séparateur (C), constituée des matériaux polymères valorisables représente une masse de 19,02 tonnes, soit 84,91% en poids par rapport à la masse du flux introduit à préconcentrer.
   c) Une étape de broyage de la fraction (b₃) des matériaux polymères à valoriser provenant de l'étape b), à la maille de libération des matériaux contaminants inclus, adhérant ou assemblés aux fragments de la fraction des matériaux polymères à valoriser. Cette étape de broyage est effectuée dans la zone (E), Le broyage se pratiquant sur une grille de 25 mm.
   d) Une seconde étape de séparation aéraulique par flux gazeux dans la zone (H) de la fraction des matériaux polymères de synthèse à valoriser provenant de l'étape c) de broyage pour en éliminer au moins pour partie la fraction des matériaux contaminants libérés lors du broyage et en extraire la fraction des matériaux valorisables constituant le mélange souhaité, pré-concentré en matériaux valorisables, contenant encore des contaminants.

Cette zone de séparation aéraulique, qui comporte non seulement une séparation par flux gazeux mais également un moyen de criblage, est formée par un dispositif de séparation modulaire tel que par exemple commercialisé par la société WESTRUP.

De cette zone de séparation aéraulique et de criblage :
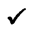 Une fraction (d₃) représentant 18,36 tonnes de matériaux polymères de synthèse valorisables, essentiellement des thermoplastiques et un peu de thermodurcissables, a été extraite sous forme de paillettes, de plaquettes et autres broyats représentant 82% en poids de la masse totale du flux entrant dans la préconcentration,
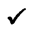 Une fraction (d₂) représentant 0,14 tonnes de matériaux contaminants lourds formée de métaux et de morceaux de fils électriques a été éliminée par criblage, représentant 0,63% en poids de la masse totale du flux entrant dans la préconcentration,
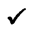 Une fraction (d₁) représentant 0,52 tonnes de matériaux également valorisables a été séparée par aspiration comprenant des mousses résiduelles de polymères, des caoutchoucs fins, des matériaux polymères thermoplastiques et thermodurcissables, sous forme de poudre de paillettes, de plaquettes, représentant 2,32% en poids de la masse totale du flux entrant dans la préconcentration.

La fraction d₃, mélange de polymères de synthèse usagés valorisables sortant de l'étape d) mais de densités éminemment variables comprises dans un intervalle de 0,900 à 1,400 est soumise à un traitement de séparation par densité en milieu aqueux, dans la zone (J), à un seuil de densité ds ≥ 1,2 pour effectuer une première sélection par densité.

Cette séparation est réalisée par densité au seuil de densité choisi 1,2 dans un milieu dense formé d'une suspension aqueuse de CₐCO₃ pulvérulent dispersé dans la phase aqueuse et stabilisée à la valeur ds=1,2 au moyen d'un agent hydrosoluble de stabilisation qui est un copolymère acrylique hydrosoluble ayant au moins une fonction phosphate.

Le milieu dense de séparation se compose :
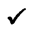 D'une phase aqueuse ayant une conductivité de 6,9 ms et un pH de 7,26
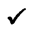 De carbonate de calcium pulvérulent dont la dimension diamétrale médiane est de 1 µm et dont la coupe granulométrique est de 5 µm (OMYALITE 90® commercialisée par la société OMYA), à raison de 362 g/litre
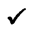 0,25% en poids sec/sec par rapport au CₐCO₃ d'un agent hydrosoluble de stabilisation qui est le DV 167 commercialisé par la société COATEX.

Cette séparation au seuil de densité ds=1,2 conduit à l'obtention de deux fractions :
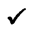 une première fraction e₁ de densité inférieure à 1,2, représentant 17,15 tonnes de matériaux valorisables (76,56% en poids du flux entrant), contenant en particulier les polyéthylène (PE), polypropylène (PP), polystyrène choc et/ou cristal ignifugé ou non (PS), copolymère acrylonitrile-butadiene-styrène (ABS) ignifugé ou non, polypropylène chargé de 5% à 40% en poids de talc, et autres matériaux polymères et
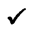 une autre fraction e₂ de densité supérieure ou égale à 1,2, représentant 1,2 tonnes de matériaux valorisables (5,40% en poids du flux entrant), se présentant sous la forme d'un mélange comprenant du chlorure de polyvinyle, polyester insaturé chargé, les polyuréthanes chargés ou autres.

La fraction e₁, mélange de polymères usagés à valoriser sortant de l'étape (J), est soumise à un traitement de séparation par densité en milieu aqueux, dans la zone (L), au seuil de densité ds=1,000, pour en extraire un flux surnageant (f₁) qui est un mélange de (PE) et (PP) et un flux coulant (f₂) comprenant les autres polymères usagés à valoriser.

Le flux surnageant (f₁), qui représente 23,40% en poids de la fraction (e₁), est soumis à un traitement de séparation par densité en un milieu hydro-alcoolique (eau et isopropanol) au seuil de densité précis ds=0,930 permettant de récupérer :
- la totalité du polyproplylène présent qui surnage, représentant 14,74% en poids de la fraction e₁ (2,528 T)
- la totalité du polyéthylène présent qui coule, représentant 8,66% en poids de la fraction e₁, (1,485 T)

Ces deux matériaux polymères usagés, finement séparés, étant directement valorisables sous forme de granulés obtenus par leur extrusion.

Le flux coulant (f₂) qui représente 76,60% en poids de la fraction (e₁), formé d'un mélange de polystyrène cristal et/ou choc ignifugé ou non, sans charge, d'un copolymère d'acrylonitrile-butadiene-styrène non chargé mais pour certaines fractions ignifugé et de polypropylène chargé de talc de 5% à 40% constitue la fraction des matériaux polymères usagés, dont les densités sont comprises dans l'intervalle 1,000 à 1,199, bornes comprises, et qui sont à séparer selon l'invention.

La fraction f₂, mélange de polymères de synthèse usagés valorisables sortant du séparateur (L) est soumise à un traitement de séparation par densité en milieu aqueux, dans la zone (N), à un seuil de densité "ds"=1,100.

Cette séparation est réalisée par densité au seuil de densité choisi 1,100 dans un milieu dense formé d'une suspension aqueuse de CₐCO₃ pulvérulent dispersé dans la phase aqueuse et stabilisée à la valeur ds=1,100 au moyen d'un agent hydrosoluble de stabilisation qui est un copolymère acrylique hydrosoluble ayant au moins une fonction phosphate.

Le milieu dense de séparation se compose :
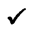 D'une phase aqueuse ayant une conductivité de 6,9 ms et un pH de 7,26
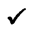 De carbonate de calcium pulvérulent dont la dimension diamétrale médiane est de 1 µm et dont la coupe granulométrique est de 10 µm (OMYALITE 50 commercialisée par la société OMYA), à raison de 169,5 g/litre
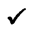 0,25% en poids sec/sec par rapport au CₐCO₃ d'un agent hydrosoluble de stabilisation qui est le DV 167 commercialisé par la société COATEX.

Cette séparation au seuil de densité ds=1,100 conduit à l'obtention de deux fractions :
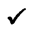 une première fraction g₁ de densité inférieure à 1,100, représentant 11,317 tonnes de matériaux valorisables (51,82% en poids du flux entrant), contenant en particulier du polystyrène (PS), copolymère acrylonitrile-butadiene-styrène (ABS), polypropylène chargé talc, et autres matériaux polymères et
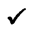 une autre fraction g₂ de densité supérieure ou égale à 1,100, représentant 1,820 tonnes de matériaux valorisables (8,13% en poids du flux entrant), se présentant sous la forme d'un mélange comprenant du polypropylène chargé en talc, du polystyrène chargé et/ou ignifugé, des copolymères acrylonitrile-butadiène-styrène (ABS) chargés et/ou ignifugés, ou autres matériaux polymères.

Le flux g₁ est en fait formé :
- d'un mélange de polystyrènes cristal ou choc, traités ou non pour les rendre ignifugés et/ou adjuvantés au moyen de divers agents connus. C'est pourquoi l'intervalle des densités de ces divers polystyrènes est compris entre 1,000 et 1,080.
- d'un mélange copolymères acrylonitrile-butadiene-styrène, dont la densité vraie est déterminée par les quantités relatives des trois monomères mis en oeuvre, par des adjuventations éventuelles et par les traitements d'ignifugation expliquant l'intervalle des densités de ces divers (ABS) qui est compris entre 1,000 et également 1,080.
- d'un mélange de polypropylène chargé en talc dont la teneur en % en poids de talc peut évoluer de 5% à 20%. Dès lors, l'intervalle de densité du polypropylène chargé talc est aussi compris entre 1,000 et 1,080.

Ce flux g₁ est, dès lors, soumis à une séparation par classe de densité croissante au moyen d'un milieu dense de séparation se composant :
- d'une phase aqueuse ayant une conductivité de 6,9 ms et un pH de 7,26,
- de carbonate de calcium pulvérulent de dimension diamétrale médiane de 1 µm et dont la coupe granulométrique est de 5 µm (OMYALITE 90® commercialisée par la société OMYA) dont les quantités pondérales pour chaque densité sont exprimées dans le tableau II suivant
- de 0,25% en poids sec/sec par rapport au CₐCO₃ de l'agent hydrosoluble de stabilisation qui est un copolymère acrylique hydrosoluble phosphaté commercialisé par la société COATEX.

Pour ce faire et dans chaque classe de densité connue représentée dans le tableau II, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

**Tableau II :**

| **Densité ds établie comme seuil** de **séparation** | **CₐCO₃ en g/l pulvérulent pour créer ds** | **Limites de chaque classe de densité** | **% en poids dans chaque classe** | | |
|---|---|---|---|---|---|
| | | | ***De PS*** | ***d'ABS*** | **de *PP talc*** |
| 1,020 | 32,30 | [1,000 à 1,020[ | 1,20% | 0,60% | 6,40% |
| 1,042 | 68,70 | [1,020 à 1,042[ | 22,30% | 0,00% | 16,40% |
| 1,050 | 82,20 | [1,042 à 1,050[ | 35,60% | 1,60% | 17,20% |
| 1,053 | 87,30 | [1,050 à 1,053[ | 10,00% | 3,20% | 8,00% |
| 1,055 | 90,70 | [1,053 à 1,055[ | 8,20% | 5,60% | 3,20% |
| 1,058 | 95,80 | [1,055 à 1,058[ | 4,00% | 6,40% | 5,20% |
| 1,060 | 99,20 | [1,058 à 1,060[ | 9,10% | 14,40% | 7,60% |
| 1,065 | 107,80 | [1,060 à 1,065[ | 5,60% | 17,20% | 10,40% |
| 1,070 | 116,50 | [1,065 à 1,070 [ | 2,80% | 25,80% | 9,20% |
| 1,080 | 133,90 | [1,070 à 1,080[ | 1,20% | 24,20% | 16,00% |
| 1,090 | 151,60 | [1,080 à 1,090[ | 0,00% | 1,00% | 0,40% |
| 1,100 | 169,50 | [1,090 à 1,100 [ | 0,00% | 0,00% | 0,00% |
| ***TOTAL*** | | | ***100,00%*** | ***100,00%*** | ***100,00%*** |

Les quantités de la CₐCO₃ mises en oeuvre dans chaque classe de densité sont déterminées par la mesure de la densité et peuvent varier selon la pureté du CₐCO₃ utilisé.

Comme le tableau II le montre,
- le PS est majoritairement présent dans l'intervalle de densité [1,020-1,055[, constituant un premier groupe relatif au PS cristal, mais un deuxième groupe de densité se manifeste dans l'intervalle [1,055-1,070[ qui est relatif au PS choc, sans omettre que certains PS présents sont vraisemblablement ignifugés. Ces diverses classes de densité sont statistiquement justifiées par la présence de plusieurs familles de PS dans ce polymère usagé à valoriser.
- L'ABS est également distribué dans plusieurs classes de densité, mais sa présence est majoritaire dans l'intervalle de densité [1,058-1,080[. Dans le cas de l'ABS, il apparaît également une distribution large des densités en raison de la présence de plusieurs types d'ABS dont les compositions peuvent varier par les quantités relatives de leurs monomères et également par la présence d'agents d'ignifugation.
- Le PP talc est aussi distribué dans plusieurs classes par des variations importantes de densité en raison de la présence de la charge de talc qui peut varier de 5% en poids à 20% en poids.

Pour réaliser la séparation effective du PS, de l'ABS et du PP talc présents dans une même classe de densité, le mélange des matériaux polymères usagés à valoriser extrait de chaque classe de densité du tableau II, est soumis à une nouvelle séparation par densité croissante ou décroissante au moyen d'un milieu dense de séparation se composant :
- D'une phase aqueuse ayant une conductivité de 6,9 ms et un pH de 7,26,
- De carbonate de calcium pulvérulent de dimension diamétrale médiane de 1 µm et dont la coupe granulométrique est de 5 µm (OMYALITE 90® commercialisée par la société OMYA) et dont les quantités pondérales sont exprimées dans le tableau III suivant
- De 0,25% en poids sec/sec par rapport au CₐCO₃ de l'agent hydrosoluble de stabilisation qui est un copolymère hydrosoluble phosphaté DV 167 commercialisé par la société COATEX.

A titre d'exemple, deux classes seulement de séparation par densité, issues du tableau II, sont sélectionnées et traitées conformément à l'invention, pour illustrer la capacité du procédé de séparation sélective pour l'établissement de suspensions séparatives stables et invariantes en densité, quand est créé le niveau de densité "ds" choisi comme seuil de séparation des divers matériaux polymères usagés à séparer, le niveau de précision de la densité pouvant atteindre en valeur absolue |0,001|, c'est-à-dire pouvant atteindre autour de la valeur "ds" choisie une précision par rapport à cette valeur "ds" de ±0,0005.

Il est toutefois rappelé que des polymères usagés de nature chimique différente mais de densité exactement identique ne sont pas séparables par le procédé de l'invention et nécessitent d'autres moyens de séparation basés sur d'autres critères.

Les deux classes de densité issues du tableau II, et traitées selon le procédé de l'invention sont les suivantes :
[1,042 à 1,050[
et [1,065 à 1,070[

Pour ce faire et dans chaque classe de densité connue représentée dans le tableau III, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

Cette séparation très sélective a donné, pour chaque classe, les résultats consignés classe par classe dans le Tableau III suivant :

**Tableau III :**

| **Densité ds établie comme seuil de séparation** | **CₐCO₃ en g/l pulvérulent pour créer ds** | **Limites de chaque classe de densité** | **% en poids dans chaque classe** | | |
|---|---|---|---|---|---|
| | | | ***De PS*** | ***d'ABS*** | ***de PP talc*** |
| 1, 043 | 70,40 | [1,042-1,043[ | 0,000 | 0,000 | 0,609 |
| 1,044 | 72,80 | [1,043-1,044[ | 0,000 | 0,000 | 0,610 |
| 1,045 | 74,50 | [1,044-1,045[ | 0,000 | 0,000 | 0,756 |
| 1,046 | 76,20 | [1,045-1,046[ | 0,000 | 0,000 | 1,025 |
| 1,047 | 77,20 | [1,046-1,047[ | 0,000 | 0,000 | 0,305 |
| 1,048 | 78,80 | [1,047-1,048[ | 0,000 | 0,000 | 0,920 |
| 1,049 | 80,50 | [1,048-1,049[ | 7,100 | 0,000 | 3,050 |
| 1,050 | 82,20 | [1,049-1,050[ | 15,125 | 0,000 | 9,125 |
| 1,066 | 109,60 | [1,065-1,066[ | 1,050 | 0,115 | 6,125 |
| 1,067 | 111,30 | [1,066-1,067[ | 0,920 | 0,320 | 1,952 |
| 1,068 | 113,00 | [1,067-1,068[ | 1,250 | 0,825 | 1,060 |
| 1,069 | 114,70 | [1,068-1,069[ | 1,063 | 5,690 | 0,743 |
| 1,070 | 116,50 | [1,069-1,070[ | 1,317 | 10,250 | 0,520 |

| | | | | | |
|---|---|---|---|---|---|
| - Comme le Tableau III le révèle, le procédé selon l'invention assure une excellente maîtrise dans la séparation sélective par densité des matériaux polymères présents, la sensibilité de la densité de séparation atteignant ±0,0005 par rapport au seuil de densité choisi « ds ». - Toutefois, des matériaux polymères de même densité mais de composition différente sont présents dans le mélange industriel initial traité dans cet exemple de telle sorte que d'autres moyens de séparation doivent être mis en oeuvre pour séparer dans chaque fraction, de polymères de densité identique, chaque type de polymère présent. | | | | | |

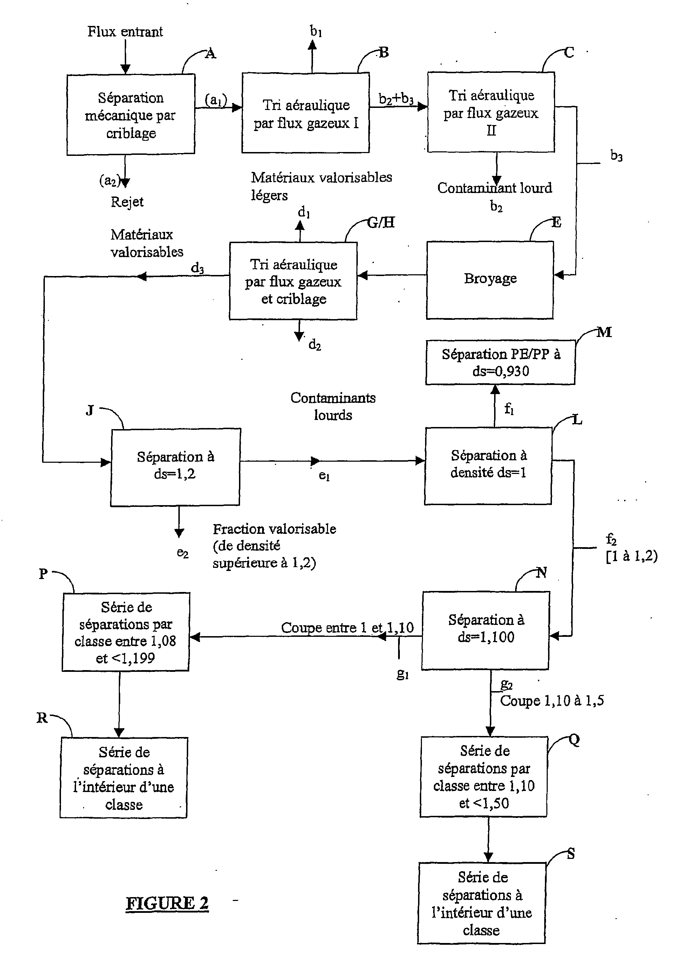

### Exemple 2 : (conforme à la figure 2)

Sur un site de broyage industriel de véhicules automobiles en fin de vie et après la séparation de la majeure partie des divers métaux à récupérer, un flux de 22,92 tonnes de matériaux valorisables issus de cette séparation, formé d'un mélange de polymères de synthèse usagés à valoriser et de matériaux contaminants à éliminer est soumis à une phase de préconcentration comme décrit dans l'exemple 1 afin de sélectionner dans ce mélange de matériaux polymères usagés des matériaux polymères usagés à valoriser appartenant à l'intervalle de densité allant de 1,000 à 1,600 à traiter selon l'invention, la borne inférieure étant incluse, la borne supérieure étant exclue, afin de permettre la récupération du chlorure de polyvinyle (PVC) .

La composition du flux de matériaux entrant dans la phase de préconcentration est donnée dans le tableau IV ci-après.

**Tableau IV :**

| **Matériaux** | **Composition et granulométrie** | **Teneur en % en poids** |
|---|---|---|
| **Polymères** | PE, PP, PS, ABS, PP Talc, PVC, ... | 19% en poids |
| | sous forme fragmentée | |
| **Caoutchouc et/ou élastomères** | Tous types de joints et/ou de gainages isolants de câbles électriques | 77% en poids |
| **Métaux** | Fragments de métaux ferreux mais surtout non ferreux : cuivre, aluminium... | 4% en poids |

La préconcentration est effectuée sur le flux précité, et consiste à traiter le mélange des matériaux issus de broyage se présentant sous une forme fragmentée, pour en éliminer au moins pour partie les matériaux contaminant les matériaux valorisables. Ledit mélange à traiter comprenant :
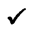 Une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
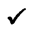 Des fractions de matériaux contaminants formés de matériaux métalliques et/ou de matériaux organiques autres que les matériaux polymères non expansés et/ou des matériaux polymères de synthèse dans un état expansé, comporte les étapes de traitement telles que décrites dans l'exemple 1 :
   a) Une première étape de séparation mécanique en (A) par criblage et/ou facteur de forme pour extraire au moins pour partie du mélange des matériaux fragmentés, la fraction des matériaux contaminants. Les mailles de crible étaient de 0-4 mm et on a retiré 0,2 tonnes de matériaux contaminants représentant 0,87% en poids du flux entrant.
   b) Une étape de séparation aéraulique, par flux gazeux, du mélange de matériaux provenant de l'étape a) dans deux séparateurs aérauliques (B) et (C) couplés. Dans le premier séparateur aéraulique (B), la fraction (b₁) représentant 0,46 tonnes de matériaux dits légers a été traitée par aspiration et les fractions b₂ et b₃ extraites par le fond du séparateur aéraulique (B) et représentant 22,26 tonnes de matériaux dits lourds ont été recueillies pour être traitées dans le séparateur aéraulique (C). La fraction (b₁) représente 2,01% en poids de légers éliminés.
      Le mélange des fractions (b₂) + (b₃) représente 97,12% en poids de matériaux lourds.
      Le mélange des fractions (b₂) et (b₃) représentant 22,26 tonnes a été introduit dans le deuxième séparateur de tri aéraulique (C). La fraction (b₂) constituée de matériaux contaminants tels que des métaux,... représentant une masse de 12,84 tonnes, est extraite par le fond du séparateur aéraulique (C), soit 56,02% de la masse entrante.
      La fraction (b₃), également extraite du séparateur (C), constituée des matériaux polymères valorisables représente une masse de 9,42 tonnes, soit 41,10% en poids par rapport à la masse du flux introduit à préconcentrer.
   c) Une étape de broyage dans la zone (E) sur grille de 25 mm de la fraction (b₃) des matériaux polymères à valoriser provenant de l'étape b), à la maille de libération des matériaux contaminants inclus, adhérant ou assemblés aux fragments de la fraction des matériaux polymères à valoriser.
   d) Une seconde étape de séparation aéraulique par flux gazeux dans la zone (H) de la fraction des matériaux polymères de synthèse à valoriser provenant de l'étape c) de broyage. Cette zone de séparation aéraulique comporte non seulement une séparation par flux gazeux mais également un moyen de criblage (par exemple dispositif de séparation modulaire de la société WESTRUP).

De cette zone de séparation aéraulique et de criblage (H) :
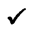 Une fraction (d₁) représentant 4,82 tonnes de matériaux également valorisables a été séparée par aspiration comprenant des mousses résiduelles de polymères, des caoutchoucs fins, des matériaux polymères thermoplastiques et thermodurcissables, sous forme de poudre de paillettes, de plaquettes, représentant 21,03% en poids de la masse totale du flux entrant dans la préconcentration,
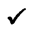 Une fraction (d₂) représentant 0,10 tonnes de matériaux contaminants lourds formée de métaux et de morceaux de fils électriques, et autres, a été éliminée par criblage, représentant 0,44% en poids de la masse totale du flux entrant dans la préconcentration,
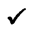 Une fraction (d₃) représentant 4,50 tonnes de matériaux polymères de synthèse valorisables, essentiellement des thermoplastiques et un peu de thermodurcissables, a été extraite sous forme de paillettes, de plaquettes et autres broyats représentant 19,63% en poids de la masse totale du flux entrant dans la préconcentration,

La fraction d₃, mélange de polymères de synthèse usagés valorisables sortant de l'étape d) mais de densités éminemment variables comprises dans un intervalle de 0,900 à 1,600 est soumise à un traitement de séparation par densité en milieu aqueux, dans la zone (J), à un seuil de densité ds ≥ 1,500 pour effectuer une première sélection par densité.

Cette séparation est réalisée par densité au seuil de densité choisi 1,500 dans un milieu dense formé d'une suspension aqueuse de CₐCO₃ pulvérulent dispersé dans la phase aqueuse et stabilisée à la valeur ds=1,5 au moyen de l'agent hydrosoluble de stabilisation qui est un copolymère acrylique hydrosoluble ayant au moins une fonction phosphate.

Le milieu dense de séparation se compose :
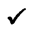 D'une phase aqueuse ayant une conductivité de 9,8 ms et un pH de 6,90,
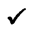 De carbonate de calcium pulvérulent dont la dimension diamétrale médiane est de 2 µm et dont la coupe granulométrique est de 20 µm (OMYALITE 50® commercialisée par la société OMYA), à raison de 1132 g/litre
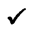 0,3% en poids sec/sec par rapport au CₐCO₃ d'un agent hydrosoluble de stabilisation qui est le DV 167 commercialisé par la société COATEX.

Cette séparation au seuil de densité ds=1,5 conduit à l'obtention de deux fractions :
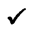 une première fraction e₁ de densité inférieure à 1,5, représentant 4,05 tonnes de matériaux valorisables (17,67% en poids du flux entrant), contenant en particulier les polyéthylène (PE), polypropylène (PP), polystyrène choc et/ou cristal ignifugé ou non (PS), copolymère acrylonitrile-butadiene-styrène (ABS) non chargé ignifugé ou non, polypropylène chargé de 5% à 40% en poids de talc, des chlorures de polyvinyles (PVC) non chargés et autres
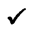 une autre fraction e₂ de densité supérieure ou égale à 1,5, représentant 0,45 tonnes de matériaux valorisables (1,96% en poids du flux entrant), se présentant sous la forme d'un mélange comprenant chlorure de polyvinyle chargé, les polyuréthanes chargés ou autres.

La fraction e₁, mélange de polymères usagés à valoriser sortant de l'étape (J), est soumise à un traitement de séparation par densité en milieu aqueux, dans la zone (L), au seuil de densité ds=1,000, pour en extraire un flux surnageant (f₁) qui est un mélange de (PE) et (PP) et un flux coulant (f₂) comprenant les autres polymères usagés à valoriser.

Le flux surnageant (f₁) qui représente 1,76 T soit 43,46% en poids de la fraction (e₁) est soumis à un traitement de séparation par densité en un milieu hydroalcoolique (eau et isopropanol) :
- au seuil de densité précis ds=0,930 permettant de récupérer :
- la totalité du polypropylène présent qui sur masse représentant 28,25% en poids de la fraction e₁ (1,144 T),
- la totalité du polyéthylène présent qui coule représentant 15,21% en poids de la fraction e₁ (0,616 T), les deux matériaux polymères usagés finement réparés étant directement valorisables sous forme de granulés par leur extrusion.

Le flux coulant (f₂) qui représente 2,290 T soit 56,54% en poids de la fraction (e₁), formé d'un mélange de polystyrène cristal et/ou choc ignifugé ou non, sans charge, d'un copolymère d'acrylonitrile-butadiene-styrène non chargé mais pour certaines fractions ignifugé, des chlorures de polyvinyle non chargés, et de polypropylène chargé de talc de 5% à 40% constitue la fraction des matériaux polymères usagés, dont les densités sont comprises dans l'intervalle 1,000 à 1,500, bornes comprises, et qui sont à séparer selon l'invention.

La fraction f₂, mélange de polymères de synthèse usagés valorisables sortant du séparateur (E) est soumise à un traitement de séparation par densité en milieu aqueux, dans la zone (N), à un seuil de densité "ds"=1,100, pour écarter et recueillir une partie des PS, ABS et PP talc.

Cette séparation est réalisée par densité au seuil de densité choisi 1,100 dans un milieu dense formé d'une suspension aqueuse de CₐCO₃ pulvérulent dispersé dans la phase aqueuse et stabilisée à la valeur ds=1,100 au moyen d'un agent hydrosoluble de stabilisation qui est un copolymère acrylique hydrosoluble ayant au moins une fonction phosphate.

Le milieu dense de séparation se compose :
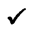 D'une phase aqueuse ayant une conductivité de 9,8 ms et un pH de 6,9
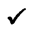 De carbonate de calcium pulvérulent dont la dimension diamétrale médiane est de 2 µm et dont la coupe granulométrique est de 20 µm (OMYALITE 50® commercialisée par la société OMYA), à raison de 169,5 g/litre
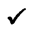 0,3% en poids sec/sec par rapport au CₐCO₃ d'un agent hydrosoluble de stabilisation qui est le DV 167 commercialisé par la société COATEX.
Cette séparation au seuil de densité ds=1,100 conduit à l'obtention de deux fractions :
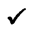 une première fraction g₁ de densité inférieure à 1,100, représentant 1,44 tonnes de matériaux valorisables (6,47% en poids du flux entrant), contenant en particulier du polystyrène (PS), copolymère acrylonitrile-butadiene-styrène (ABS), polypropylène chargé talc, et autres matériaux polymères qui est traitée conformément au traitement pratiqué dans l'exemple 1, pour cette fraction et
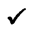 une autre fraction g₂ de densité supérieure ou égale à 1,100, représentant 0,85 tonnes de matériaux valorisables (3,71% en poids du flux entrant), se présentant sous la forme d'un mélange comprenant du polyvinylchlorure (PVC), du polypropylène chargé talc (charge supérieure à 20% en poids), du polystyrène et un copolymère d'acrylonitrile-Butadiène-styrène (ABS) chargés et/ou ignifugés, du polyuréthane (PU) chargé, du polyéthylène (PE) chargé, et autres qui est traitée en vue de valoriser chacun des polymères et plus particulièrement le PVC.

Le flux g₂ est en fait essentiellement constitué de PVC. Ce flux g₂ est dès lors introduit dans la série de séparateurs (Q) par classes de densité créées dans l'intervalle [1,100 à 1,500[, où il est soumis à une séparation par classe de densité croissante au moyen d'un milieu dense de séparation se composant :
- d'une phase aqueuse ayant une conductivité de 9,8 ms et un pH de 6,9,
- de carbonate de calcium pulvérulent de dimension diamétrale médiane de 3 µm et dont la coupe granulométrique est de 20 µm (OMYALITE 50® commercialisée par la société OMYA) dont les quantités pondérales pour chaque densité sont exprimées dans le tableau V suivant
- de 0,3% en poids sec/sec par rapport au CₐCO₃ de l'agent hydrosoluble de stabilisation qui est un copolymère hydrosoluble phosphaté commercialisé par la société COATEX (DV 167).

Pour ce faire et dans chaque classe de densité connue représentée dans le tableau V, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

**Tableau V :**

| **Densité ds établie comme seuil de séparation** | **CₐCO₃ en g/l pulvérulent pour créer ds** | **Limites de poids chaque classe de densité** | **% en poids dans chaque classe** | **PS** | **ABS** | **PP talc** | **PP** | **PE** | **Autres** | **PVC** |
|---|---|---|---|---|---|---|---|---|---|---|
| | | <1,000 | 30,6% | 0 | 0 | 0 | 19, 8 | 10,8 | 0 | 0 |
| 1,000 | 0,00 | 1,000-1,100 [ | 22,6% | 12,6 | 6,2 | 3,8 | 0 | 0 | 0 | 0 |
| 1,100 | 169,5 | [1,100-1,350[ | 31% | 2 | 6, 2 | 11, 6 | 0 | 0 | 9,7 | 1, 5 |
| 1,350 | 700,0 | [1,350-1,400 [ | 2,8% | 0 | 0 | 0 | 0 | 0 | 2,4 | 0,4 |
| 1,400 | 834,5 | [1,400-1,450 [ | 3,5% | 0 | 0 | 0 | 0 | 0 | 3 | 0, 5 |
| 1,450 | 977,0 | >1,450 | 9,5% | 0 | 0 | 0 | 0 | 0 | 9 | 0,5 |
| ***TOTAL*** | | | ***100,00 %*** | ***14,6*** | ***12,4*** | ***15,4*** | ***19,8*** | ***10,8*** | ***24,1*** | ***2,9*** |

| | | | | | | | | | | |
|---|---|---|---|---|---|---|---|---|---|---|
| - Comme le Tableau V le révèle, le procédé de l'invention assure une excellente maîtrise dans la séparation sélective par densité des matériaux polymères présents, la sensibilité de la densité de séparation atteignant ± 0,0005 par rapport au seuil de densité choisi « ds ». - Toutefois, des matériaux polymères de même densité mais de composition différente sont présents dans le mélange industriel initial traité dans cet exemple de telle sorte que d'autres moyens de séparation doivent être mis en oeuvre pour séparer chaque fraction, de polymères de densité identique, chaque type de polymère présent. | | | | | | | | | | |

### Exemple 3 :

Pour confirmer la capacité du procédé selon l'invention de séparation sélective en milieu liquide dense des constituants d'un mélange de matériaux organiques, de synthèses qui sont des polymères de types différents, mais pour certains très proches les uns des autres en densité, un mélange synthétique a été préparé ayant la composition en poids suivante, résumée dans le tableau VI :

**Tableau VI :**

| Polymère | Densité mesurée | Mélanges synthétiques | |
|---|---|---|---|
| | | Kilos Introduits | % en poids |
| Copolymère D'éthylène-propylène | 0,900 | 350 | 46,06 |
| Polystyrène | 1,050 | 100 | 13,16 |
| Copolymère d'éthylène-propylène chargé à 20% de talc | 1,060 | 150 | 19,73 |
| Copolymère acrylonitrile-butadiène-styrène | 1,070 | 80 | 10,53 |
| Polyamide 6 | 1,13 | 40 | 5,26 |
| Chlorure de polyvinyle | 1,38 | 40 | 5,26 |
| Total | | 760 | 100% |

Ce mélange est soumis à un traitement de séparation par densité dans un milieu liquide dense formé d'une suspension aqueuse de CaCO₃ pulvérulent dispersé dans la phase aqueuse et stabilisée à la valeur de densité ds choisie au moyen d'un agent hydrosoluble de stabilisation qui est un copolymère acrylique hydrosoluble ayant au moins une fonction phosphate.

Le milieu dense de séparation se compose :
- D'une phase aqueuse ayant une conductivité de 6,9 ms et un pH de 7,26
- De carbonate de calcium pulvérulent dont la dimension diamétrale médiane est de 1 µm et dont la coupe granulométrique est de 5 µm (OMYALITE 90® commercialisée par la société OMYA), selon des quantités en g/l nécessaires pour créer des valeurs de densité « ds » croissantes du milieu dense, depuis la valeur initiale ds=1,000 jusqu'à la valeur ds=1,200 pour assurer la séparation sélective.
- 0,25% en poids sec/sec par rapport au CaCO₃ de l'agent hydrosoluble de stabilisation qui est le DV 167 commercialisé par la société COATEX.

La séparation sélective se fait, dès lors, à travers des seuils de densité « ds » croissants assurant l'obtention pour chaque seuil de densité « ds », de deux fractions polymères, l'une surnageante de densité inférieure à « ds », et l'autre plongeante de densité supérieure à « ds ». Toutes les informations relatives à ces séparations sélectives sont réunies dans le Tableau VII suivant :

**Tableau VII :**

| Densité ds établie comme seuil de séparation | CaCO₃ pulvérulent en g/l pour créer ds | Types et quantités de polymères sélectivement séparés | % de polymères récupérés par rapport au mélange synthétique initial |
|---|---|---|---|
| 1,000 | 0,00 | 348 kg de copo (E/P) | 99,4 |
| 1,055 | 90,70 | 99 kg de PS | 99,0 |
| 1,065 | 107,80 | 148,6 kg de copo (E/P) 20% talc | 99,1 |
| 1,075 | 125,20 | 79,0 kg de ABS | 98,8 |
| 1,200 | 361,60 | 39,5 kg de PA 6 | 98,8 |
| > 1200 | | 39,6 kg de PVC rigide | 99,0 |

Comme il est possible de le constater, la séparation sélective des divers polymères présents dans le mélange synthétique initial par classe de densité croissante d'une suspension aqueuse de CaCO₃ en présence d'un agent de stabilisation de la suspension est précise et efficace, puisque chaque polymère présent dans le mélange initial est extrait sélectivement pour chaque seuil de densité « ds » choisi pour ce faire, sans qu'il y ait entraînement de l'un ou l'autre polymère dans des classes voisines, chaque classe de séparation sélective ayant fonctionnée avec une excellente prévision et contenant que le seul polymère sélectionné.

Par rapport à la masse totale du mélange synthétique initial (760 kg), la perte de polymères au cours de la séparation sélective selon le procédé de l'invention est de 6,3 kg, c'est-à-dire de 0,83% en poids.

### Exemple 4 : (conforme à la figure 1)

Sur le même site que celui de l'exemple 1, de broyage industriel de matériels électroménagers en fin de vie et après la séparation de la majeure partie des divers métaux à récupérer, un flux de 22,4 tonnes de matériaux valorisables formé d'un mélange de polymères de synthèse usagés à valoriser et de matériaux contaminants, est soumis à une phase de préconcentration afin d'extraire de ce mélange, les matériaux polymères usagés valorisables appartenant à l'intervalle de densité allant de 1,000 à 1,200 à traiter selon l'invention.

La composition du flux de matériaux entrant dans la phase de préconcentration est donnée dans le tableau VIII ci-après.

**Tableau VIII :**

| **Matériaux** | **Composition broyée à la grille de 25 mm** | **Teneur en % en poids** |
|---|---|---|
| **Polymères** | PE, PP, PS, ABS, PP Talc, PVC,... | 65% en poids |
| | sous forme fragmentée | |
| **Caoutchouc et/ou élastomères** | Tous types de joints et/ou de gainages isolants de câbles électriques | 29% en poids |
| **Métaux** | Fragments de métaux ferreux mais surtout non ferreux : cuivre, aluminium... | 6% en poids |

La préconcentration est effectuée conformément à l'exemple 1 à partir du mélange précité comprenant:
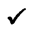 Une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
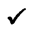 Des fractions de matériaux contaminants formés de matériaux métalliques et/ou de matériaux organiques autres que les matériaux polymères non expansés et/ou des matériaux polymères de synthèse dans un état expansé, comporte les étapes de traitement a) à d) de l'exemple 1.
   a) Dans la première étape de séparation mécanique en (A) par criblage et/ou facteur de forme, on a retiré 0,04 tonnes de matériaux contaminant représentant 0,18% en poids du flux entrant.
   b) Dans l'étape b), le flux de matériaux provenant de l'étape a), débarrassé au moins pour partie de la fraction des matériaux contaminants, a été soumise à une séparation par tri aéraulique dans deux séparateurs (B) et (C) couplés.
      Dans le premier séparateur aéraulique (B), la fraction (b₁) représentant 0,52 tonnes de matériaux dits légers a été traitée par aspiration et les fractions b₂ et b₃ extraites par le fond du séparateur aéraulique (B) et représentant 21,84 tonnes de matériaux dits lourds ont été recueillies pour être traitées dans le séparateur aéraulique (C). La fraction (b₁) représente 2,32% en poids de légers éliminés par rapport au flux entrant.
      Le mélange des fractions (b₂) + (b₃) représente 97,5% en poids de matériaux lourds.
      Le mélange des fractions (b₂) et (b₃) représentant 20,84 tonnes a été introduit dans le deuxième séparateur de tri aéraulique (C). La fraction (b₂) constituée de matériaux contaminants tels que des métaux,représentant une masse de 2,82 tonnes, est extraite par le fond du séparateur aéraulique (C).
      La fraction (b₃), également extraite du séparateur (C), constituée des matériaux polymères valorisables représente une masse de 19,02 tonnes, soit 84,91% en poids par rapport à la masse du flux introduit à préconcentrer.
   c) L'étape de broyage de la fraction (b₃) des matériaux polymères à valoriser provenant de l'étape b), à la maille de libération des matériaux contaminants inclus, est effectuée dans la zone (E), Le broyage se pratiquant sur une grille de 25 mm.
   d) La seconde étape de séparation aéraulique par flux gazeux de la fraction des matériaux polymères de synthèse à valoriser provenant de l'étape c) de broyage est effectuée dans la zone (H), pour en éliminer au moins pour partie la fraction des matériaux contaminants libérés lors du broyage et en extraire la fraction des matériaux valorisables constituant le mélange souhaité, pré-concentré en matériaux valorisables, contenant encore des contaminants.

Cette zone de séparation aéraulique (H), comporte non seulement une séparation par flux gazeux mais également un moyen de criblage, et est formée par un dispositif de séparation modulaire tel que par exemple commercialisé par la société WESTRUP.

De cette zone de séparation(H):
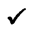 Une fraction (d₃) représentant 18,36 tonnes de matériaux polymères de synthèse valorisables, a été extraite représentant 82% en poids de la masse totale du flux entrant dans la préconcentration,
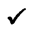 Une fraction (d₂) représentant 0,14 tonnes de matériaux contaminants lourds formée de métaux et de morceaux de fils électriques a été éliminée, représentant 0,63% en poids de la masse totale du flux entrant dans la préconcentration,
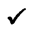 Une fraction (d₁) représentant 0,52 tonnes de matériaux également valorisables a été séparée par aspiration comprenant des mousses résiduelles de polymères, des caoutchoucs fins, des matériaux polymères thermoplastiques et thermodurcissables, représentant 2,32% en poids de la masse totale du flux entrant dans la préconcentration.

La fraction d₃, mélange de polymères de synthèse usagés valorisables sortant de l'étape d) mais de densités éminemment variables comprises dans un intervalle de 0,900 à 1,400, est soumise à un traitement de séparation par densité en milieu aqueux, dans la zone (J), à un seuil de densité ds ≥ 1,2 pour effectuer une première sélection par densité.

Cette séparation est réalisée par densité au seuil de densité choisi 1,2 dans un milieu dense formé d'une suspension aqueuse de kaolin pulvérulent dispersé dans la phase aqueuse et stabilisée à la valeur ds=1,2 au moyen d'un agent hydrosoluble de stabilisation qui est un copolymère acrylique hydrosoluble ayant au moins une fonction phosphate.

Le milieu dense de séparation se compose :
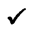 D'une phase aqueuse ayant une conductivité de 6,9 ms et un pH de 7,26
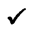 De kaolin dont la dimension diamétrale médiane est de 1 µm et dont la coupe granulométrique est de 30 µm, à raison de 373.29 g/litre
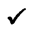 0,25% en poids sec/sec par rapport au kaolin d'un agent hydrosoluble de stabilisation qui est le DV 167 commercialisé par la société COATEX.

Cette séparation au seuil de densité ds=1,2 conduit à l'obtention de deux fractions :
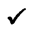 une première fraction e₁ de densité inférieure à 1,2, représentant 17,20 tonnes de matériaux valorisables (76.78% en poids du flux entrant), contenant en particulier les polyéthylène (PE), polypropylène (PP), polystyrène choc et/ou cristal ignifugé ou non (PS), copolymère acrylonitrile-butadiene-styrène (ABS) ignifugé ou non, polypropylène chargé de 5% à 40% en poids de talc, et autres matériaux polymères et
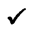 une autre fraction e₂ de densité supérieure ou égale à 1,2, représentant 1,16 tonnes de matériaux valorisables (5,18% en poids du flux entrant), se présentant sous la forme d'un mélange comprenant du chlorure de polyvinyle, polyester insaturé chargé, les polyuréthanes chargés ou autres.

La fraction e₁, mélange de polymères usagés à valoriser sortant de l'étape (J), est soumise à un traitement de séparation par densité en milieu aqueux, dans la zone (L), au seuil de densité ds=1,000, pour en extraire un flux surnageant (f₁) qui est un mélange de (PE) et (PP) et un flux coulant (f₂) comprenant les autres polymères usagés à valoriser.

Le flux surnageant (f₁), qui représente 23,50% en poids de la fraction (e₁), est soumis à un traitement de séparation par densité en un milieu hydro-alcoolique (eau et isopropanol) au seuil de densité précis ds=0,930 permettant de récupérer :
- la totalité du polyproplylène présent qui surnage, représentant 14,76% en poids de la fraction e₁ (2,54 T)
- la totalité du polyéthylène présent qui coule, représentant 8,74% en poids de la fraction e₁, (1,50 T)
ces deux matériaux polymères usagés, finement séparés, étant directement valorisables sous forme de granulés obtenus par leur extrusion.

Le flux coulant (f₂) qui représente 76,50% en poids de la fraction (e₁), formé d'un mélange de polystyrène cristal et/ou choc ignifugé ou non, sans charge, d'un copolymère d'acrylonitrile-butadiene-styrène non chargé mais pour certaines fractions ignifugé et de polypropylène chargé de talc de 5% à 40% constitue la fraction des matériaux polymères usagés, dont les densités sont comprises dans l'intervalle 1,000 à 1,199, bornes comprises, et qui sont à séparer selon l'invention.

La fraction f₂, mélange de polymères de synthèse usagés valorisables sortant du séparateur (L) est soumise à un traitement de séparation par densité en milieu aqueux, dans la zone (N), à un seuil de densité "ds"=1,100.

Cette séparation est réalisée par densité au seuil de densité choisi 1,100 dans un milieu dense formé d'une suspension aqueuse de kaolin pulvérulent dispersé dans la phase aqueuse et stabilisée à la valeur ds=1,100 au moyen d'un agent hydrosoluble de stabilisation qui est un copolymère acrylique hydrosoluble ayant au moins une fonction phosphate.

Le milieu dense de séparation se compose :
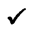 D'une phase aqueuse ayant une conductivité de 6,9 ms et un pH de 7,26
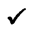 De carbonate de kaolin dont la dimension diamétrale médiane est de 1 µm et dont la coupe granulométrique est de 30 µm, à raison de 174.2 g/litre
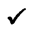 0,25% en poids sec/sec par rapport au CₐCO₃ d'un agent hydrosoluble de stabilisation qui est le DV 167 commercialisé par la société COATEX.
Cette séparation au seuil de densité ds=1,100 conduit à l'obtention de deux fractions :
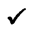 une première fraction g₁ de densité inférieure à 1,100, représentant 11,45 tonnes de matériaux valorisables (51,12% en poids du flux entrant), contenant en particulier du polystyrène (PS), copolymère acrylonitrile-butadiene-styrène (ABS), polypropylène chargé talc, et autres matériaux polymères et
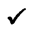 une autre fraction g₂ de densité supérieure ou égale à 1,100, représentant 1,75 tonnes de matériaux valorisables (7,81% en poids du flux entrant), se présentant sous la forme d'un mélange comprenant du polypropylène chargé en talc, du polystyrène chargé et/ou ignifugé, des copolymères acrylonitrile-butadiène-styrène (ABS) chargés et/ou ignifugés, ou autres matériaux polymères.

Le flux g₁ est en fait formé :
- d'un mélange de polystyrènes cristal ou choc, traités ou non pour les rendre ignifugés et/ou adjuvantés au moyen de divers agents connus. C'est pourquoi l'intervalle des densités de ces divers polystyrènes est compris entre 1,000 et 1,080.
- d'un mélange copolymères acrylonitrile-butadiene-styrène, dont la densité vraie est déterminée par les quantités relatives des trois monomères mis en oeuvre, par des adjuventations éventuelles et par les traitements d'ignifugation expliquant l'intervalle des densités de ces divers (ABS) qui est compris entre 1,000 et également 1,080.
- d'un mélange de polypropylène chargé en talc dont la teneur en % en poids de talc peut évoluer de 5% à 20%. Dès lors, l'intervalle de densité du polypropylène chargé talc est aussi compris entre 1,000 et 1,080.

Ce flux g₁ est, dès lors, soumis à une séparation par classe de densité croissante au moyen d'un milieu dense de séparation se composant :
- d'une phase aqueuse ayant une conductivité de 6,9 ms et un pH de 7,26,
- de kaolin pulvérulent de dimension diamétrale médiane de 1 µm et dont la coupe granulométrique est de 30 µm dont les quantités pondérales pour chaque densité sont exprimées dans le tableau II suivant
- de 0,25% en poids sec/sec par rapport au kaolin de l'agent hydrosoluble de stabilisation qui est un copolymère acrylique hydrosoluble phosphaté commercialisé par la société COATEX.

Pour ce faire et dans chaque classe de densité connue représentée dans le tableau IX, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

**Tableau IX :**

| **Densité ds établie comme seuil de séparation** | **kaolin en g/l pulvérulent pour créer ds** | **Limites de chaque classe de densité** | **% en poids dans chaque classe** | | |
|---|---|---|---|---|---|
| | | | ***De PS*** | ***d'ABS*** | ***de PP talc*** |
| 1,020 | 33.08 | [1,000 à 1,020[ | 1,25% | 0, 60% | 6,40% |
| 1,042 | 70.09 | [1,020 à 1,042[ | 22,30% | 0,00% | 16,50% |
| 1,050 | 83.87 | [1,042 à 1,050[ | 35,55% | 1,60% | 17,15% |
| 1,053 | 89.08 | [1,050 à 1,053[ | 10,08% | 3,25% | 8,05% |
| 1,055 | 92.56 | [1,053 à 1,055[ | 8,25% | 5,65% | 3,10% |
| 1,058 | 97.80 | [1,055 à 1,058[ | 3,95% | 6,35% | 5,25% |
| 1,060 | 101.3 | [1,058 à 1,060[ | 9,05% | 14,40% | 7,60% |
| 1,065 | 110.10 | [1,060 à 1,065[ | 5,62% | 17,10% | 10,35% |
| 1,070 | 118.95 | [1,065 à 1,070[ | 2,75% | 25,80% | 9,30% |
| 1,080 | 136.94 | [1,070 à 1,080[ | 1,20% | 24,25% | 15,90% |
| 1,090 | 154.97 | [1,080 à 1,090[ | 0,00% | 1,00% | 0,40% |
| 1,100 | 173.33 | [1,090 à 1,100[ | 0,00% | 0,00% | 0,00% |
| ***TOTAL*** | | | ***100%*** | ***100%*** | ***100%*** |

Les quantités de kaolin mises en oeuvre dans chaque classe de densité sont déterminées par la mesure de la densité et peuvent varier selon la pureté du kaolin utilisé.

Comme le tableau IX le montre,
- le PS est majoritairement présent dans l'intervalle de densité [1,020-1,055[, constituant un premier groupe relatif au PS cristal, mais un deuxième groupe de densité se manifeste dans l'intervalle [1,055-1,070[ qui est relatif au PS choc, sans omettre que certains PS présents sont vraisemblablement ignifugés. Ces diverses classes de densité sont statistiquement justifiées par la présence de plusieurs familles de PS dans ce polymère usagé à valoriser.
- L'ABS est également distribué dans plusieurs classes de densité, mais sa présence est majoritaire dans l'intervalle de densité [1,058-1,080[. Dans le cas de l'ABS, il apparaît également une distribution large des densités en raison de la présence de plusieurs types d'ABS dont les compositions peuvent varier par les quantités relatives de leurs monomères et également par la présence d'agents d'ignifugation.
- Le PP talc est aussi distribué dans plusieurs classes par des variations importantes de densité en raison de la présence de la charge de talc qui peut varier de 5% en poids à 20% en poids.

Pour réaliser la séparation effective du PS, de l'ABS et du PP talc présents dans une même classe de densité, le mélange des matériaux polymères usagés à valoriser extrait de chaque classe de densité du tableau II, est soumis à une nouvelle séparation par densité croissante ou décroissante au moyen d'un milieu dense de séparation se composant :
- D'une phase aqueuse ayant une conductivité de 6,9 ms et un pH de 7,26,
- De kaolin pulvérulent de dimension diamétrale médiane de 1 µm et dont la coupe granulométrique est de 30 µm et dont les quantités pondérales sont exprimées dans le tableau III suivant
- De 0,25% en poids sec/sec par rapport au CₐCO₃ de l'agent hydrosoluble de stabilisation qui est un copolymère hydrosoluble phosphaté DV 167 commercialisé par la société COATEX.

A titre d'exemple, deux classes seulement de séparation par densité, issues du tableau II, sont sélectionnées et traitées conformément à l'invention, pour illustrer la capacité du procédé de séparation sélective pour l'établissement de suspensions séparatives stables et invariantes en densité, quand est créé le niveau de densité "ds" choisi comme seuil de séparation des divers matériaux polymères usagés à séparer, le niveau de précision de la densité pouvant atteindre en valeur absolue |0,001|, c'est-à-dire pouvant atteindre autour de la valeur "ds" choisie une précision par rapport à cette valeur "ds" de ±0,0005.

Il est toutefois rappelé que des polymères usagés de nature chimique différente mais de densité exactement identique ne sont pas séparables par le procédé de l'invention et nécessitent d'autres moyens de séparation basés sur d'autres critères.

Les deux classes de densité issues du tableau II, et traitées selon le procédé de l'invention sont les suivantes :
[1,042 à 1,050[
et [1,065 à 1,070[

Pour ce faire et dans chaque classe de densité connue représentée dans le tableau X, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.
Cette séparation très sélective a donné, pour chaque classe, les résultats consignés classe par classe dans le Tableau X suivant :

**Tableau X :**

| **Densité ds établie comme seuil de séparation** | **kaolin en g/l pulvérulent pour créer ds** | **Limites de chaque classe de densité** | **% en poids dans chaque classe** | | |
|---|---|---|---|---|---|
| | | | ***De PS*** | ***d' ABS*** | ***de PP talc*** |
| 1,043 | 72.16 | [1,042-1,043[ | 0 | 0 | 0,608 |
| 1,044 | 73,89 | [1,043-1,044[ | 0 | 0 | 0,610 |
| 1,045 | 75.62 | [1,044-1,045[ | 0 | 0 | 0,754 |
| 1,046 | 77.35 | [1,045-1,046[ | 0 | 0 | 1,027 |
| 1,047 | 79.08 | [1,046-1,047[ | 0 | 0 | 0,307 |
| 1,048 | 80.81 | [1,047-1,048[ | 0 | 0 | 0,920 |
| 1,049 | 82.55 | [1,048-1,049[ | 7,12 | 0 | 3,049 |
| 1,050 | 84.29 | [1,049-1,050[ | 15,105 | 0 | 9,125 |
| 1,066 | 112.42 | [1,065-1,066[ | 1,052 | 0,113 | 6,125 |
| 1,067 | 114.20 | [1,066-1,067[ | 0,920 | 0,320 | 1,950 |
| 1,068 | 115.98 | [1,067-1,068[ | 1,248 | 0,827 | 1,058 |
| 1,069 | 117.76 | [1,068-1,069[ | 1,065 | 5,686 | 0,745 |
| 1,070 | 119.55 | [1,069-1,070[ | 1,315 | 10,254 | 0,522 |

| | | | | | |
|---|---|---|---|---|---|
| - Comme le Tableau X le révèle, le procédé selon l'invention assure une excellente maîtrise dans la séparation sélective par densité des matériaux polymères présents, la sensibilité de la densité de séparation atteignant ± 0,0005 par rapport au seuil de densité choisi « ds ». | | | | | |

Toutefois, des matériaux polymères de même densité mais de composition différente sont présents dans le mélange industriel initial traité dans cet exemple de telle sorte que d'autres moyens de séparation doivent être mis en oeuvre pour séparer dans chaque fraction, de polymères de densité identique, chaque type de polymère présent.

## Revendications

1. Procédé de séparation sélective par densité stable à un niveau de précision de ± 0,0005 à l'égard d'un niveau de densité "ds" choisi comme seuil de séparation de densité au moins égale à 1, de chacun des constituants d'un mélange de matériaux organiques de synthèse, en particulier usagés et à valoriser par recyclage, se présentant sous une forme fragmentée, consistant à effectuer leur séparation par différence de densité, dans une suspension aqueuse de particules pulvérulents dispersées en quantité adéquate pour créer le niveau de densité « ds » choisi comme seuil de séparation de l'un au moins des constituants du mélange des matériaux organiques de synthèse fragmentés à séparer sélectivement, la suspension de séparation sélective mise en oeuvre étant formée :
a) de particules solides pulvérulentes dimensionnellement sélectionnées de coupe granulométrique d'au plus 30 µm, ces particules solides pulvérulentes sélectionnées étant dispersées dans la phase aqueuse en quantité suffisante pour créer le seuil de densité « ds » choisi,
b) d'un agent hydrosoluble de stabilisation des caractéristiques rhéologiques et d'invariance de la densité « ds » au niveau de précision de ± 0,0005 par rapport à ladite densité « ds », de ladite suspension de particules solides pulvérulentes.

2. Procédé selon la revendication 1 **caractérisé en ce que** les particules solides pulvérulentes ont préférentiellement une coupe granulométrique d'au plus 20 µm et très préférentiellement d'au plus 5 µm, ces particules solides pulvérulentes sélectionnées étant dispersées dans la phase aqueuse en quantité suffisante pour créer le seuil de densité "ds" choisi."

3. Procédé selon les revendications 1 ou 2 **caractérisé en ce que** les particules pulvérulentes sont d'origine naturelle et choisies dans le groupe des matériaux minéraux pulvérulents constitué par les argiles, appartenant aux familles formées par le groupe des kaolinites, comprenant la kaolinite, la dickite, l'halloysite, les kaolinites désordonnées, les serpentines, par le groupe des micas, en particulier la muscovite, la biotite et la paragonite, la pyrophyllite et le talc, les illites et la glauconite, par le groupe des montmorillonites, en particulier le beidéllite, la stévensite, la saponite, et l'hectorite ; par le groupe des chlorites ; par le groupe des vermiculites ; par le groupe des argiles interstratifiées dont la structure unitaire est une combinaison des groupes précédents ; par le groupe des argiles fibreuses, en particulier l'attapulgite (palygorskite), la sépiolite ; par le groupe formé par le carbonate de calcium (la calcite), le carbonate de magnésium, la dolomie (carbonate double de calcium et de magnésium), le sulfate de calcium dihydraté (gypse), le sulfate de baryum, le talc, 1 alumine, la silice, le dioxyde de titane, la zircone, pris seuls ou en mélange.

4. Procédé selon les revendications 1 ou 2 **caractérisé en ce que** les particules pulvérulentes sont d'origine synthétique et choisies dans le groupe constitué par les poudres de verre, le carbonate de calcium précipité, les poudres métalliques, pris seuls ou en mélange.

5. Procédé selon l'une au moins des revendications 1 à 4 **caractérisé en ce que** les particules pulvérulentes ont un diamètre médian d'au plus 5 µm et préférentiellement compris entre 1 µm et 0,005 µm.

6. Procédé selon l'une des revendications 1 à 5 **caractérisé en ce que** l'agent hydrosoluble de stabilisation des caractéristiques rhéologiques et d'invariance de la densité apparente « ds » de la suspension de particules solides pulvérulentes, est choisi dans le groupe constitué par les phosphates et polyphosphates, les esters alkylphosphates, alkylphosphonate, alkylsulfate, alkylsulfonate, la lignine, les lignosulfonates sous forme de sels de calcium, de sodium, de fer, de chrome, de fer et de chrome, les copolymères d'anhydride maléique et d'acide styrène sulfonique, les copolymères de méthylacrylamide et d'acide (méthyl) acrylique substitués, neutralisés, estérifiés ou non, les copolymères, d'acide méthylacrylamido-alkyl sulfonique et de (méthyl)acrylamide, les polymères hydrosolubles d'acide acrylique mis en oeuvre sous la forme acide ou, éventuellement, neutralisés en tout ou en partie par des agents alcalins et/ou alcalino-terreux, par les amines salifiées par des ions monovalents et/ou polyvalents, et/ou estérifiées ou par les copolymères acryliques hydrosolubles disposant de fonctions phosphatées, phosphonées, sulfatées, sulfonées.

7. Procédé selon la revendication 6 **caractérisé en ce que** l'agent hydrosoluble de stabilisation est préférentiellement choisi parmi les copolymères acryliques hydrosoluble s, répondant à la formule générale : 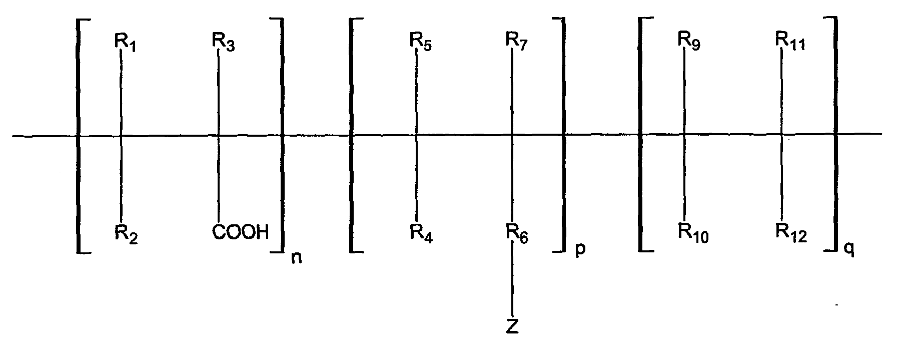
• 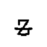 est un motif de type phosphate, phosphonate, sulfate, sulfonate, ayant au moins une fonction acide libre,
• n prend une valeur comprise entre 0 et 95,
• p prend une valeur comprise entre 95 et 5,
• q prend une valeur comprise entre 0 et 95,
• le cumul de n+p+q étant égal à 100,
• R₁ et R₂ sont simultanément de l'hydrogène ou pendant que l'un est de l'hydrogène, l'autre est une fonction carboxylique estérifiée ou non par un alcool en C₁ à C₁₂,
• R₃ est de l'hydrogène ou un radical alkyl en C₁ à C₁₂,
• R₄ et R₅ sont, simultanément ou non, de l'hydrogène ou un radical alkyl en C₁ à C₁₂, un aryle substitué ou non, une fonction carboxylique estérifiée ou non par un alcool en C₁ à C₁₂,
• R₆ est un radical, qui établit le lien entre le motif et la chaîne polymérique, ce radical R₆ étant un alkylène de formule (̵CH₂)̵ᵣ dans laquelle r peut prendre les valeurs de l'intervalle 1 à 12, un oxyde ou polyoxyde d'alkylène de formule (̵R₈-O)̵ₛ dans laquelle R₈ est un alkylène en C₁ à C₄ et s peut prendre les valeurs de 1 à 30, ou encore une combinaison des deux formules (̵CH₂)̵ᵣ et (̵R₈-O)̵ₛ,
• R₇ est de l'hydrogène ou un radical alkyl en C₁ à C₁₂,
• R₉ et R₁₀ sont simultanément de l'hydrogène, ou pendant que l'un est de l'hydrogène, l'autre est un groupement carboxylique, un ester en C₁ à C₁₂, un alkyle en C₁ à C₁₂, un aryle en C₅ ou C₆ ou un alkylaryle,
• R₁₁ est de l'hydrogène, un groupement carboxylique, un alkyle en C₁ à C₃ ou un halogène,
• R₁₂ est un ester en C₁ à C₁₂, un amide substitué ou non, un alkyl en C₁ à C₁₂, un aryle en C₅ ou C₆, un alkylaryle, un halogène, un groupement carboxylique ou encore un groupement alkyle ou aryle, phosphaté, phosphoné, sulfaté, sulfoné.

8. Procédé selon la revendication 7, **caractérisé en ce que** dans le motif Z, les fonctions acides non libres sont occupées par un cation, un groupement ammonium, une amine, un alkyle en C₁ à C₃, un aryle en C₃ ou C₆ substitué ou non, un alkylaryle, un ester en en C₁ à C₁₂ de préférence en C₁ à C₃, ou un amide substitué.

9. Procédé selon la revendication 8, **caractérisé en ce que** dans le cumul n + p + q, n = 0, quand q > 0 et q = 0 quand n > 0.

10. Procédé selon la revendication 8, **caractérisé en ce que**, dans les motifs R₁ et R₂, l'alcool estérifiant la fonction carboxylique est de préférence en C₁ à C₄.

11. Procédé selon la revendication 8, **caractérisé en ce que**, dans le motif R₃, le radical alkyl est de préférence en C₁ à C₄.

12. Procédé selon la revendication 8, **caractérisé en ce que**, dans les motifs R₄ et R₅, le radical alkyl est de préférence en C₁ à C₄.

13. Procédé selon la revendication 8, **caractérisé en ce que**, dans les motifs R₄ et R₅, l'alcool estérifiant la fonction carboxylique est préférentiellement en C₁ à C₄.

14. Procédé selon la revendication 8, **caractérisé en ce que**, dans le motif R₇, le radical alkyl est préférentiellement en C₁ à C₄.

15. Procédé selon la revendication 8, **caractérisé en ce que**, dans les motifs R₅ et R₁₀, l'ester est préférentiellement en C₁ à C₃.

16. Procédé selon la revendication 7, **caractérisé en ce que**, dans les motifs R₉ et R₁₀, l'alkyle est préférentiellement en C₁ à C₃.

17. Procédé selon la revendication 7, **caractérisé en ce que**, dans le motif R₁₂, l'ester est préférentiellement en C₁ à C₅.

18. Procédé selon la revendication 7, **caractérisé en ce que**, dans le motif R₁₂, l'alkyl est de préférence en C₁ à C₃.

19. Procédé selon la revendication 7, **caractérisé en ce que** la masse moléculaire des copolymères acryliques hydrosolubles formant l'agent de stabilisation, est comprise entre 5000 et 100 000.

20. Procédé selon la revendication 7, **caractérisé en ce que** les copolymères acryliques hydrosolubles formant l'agent de stabilisation sont au moins partiellement neutralisés, au moyen d'un agent de neutralisation choisi dans le groupe constitué par les hydroxydes de sodium, de potassium, d'ammonium, de calcium, de magnésium et les amines primaires, secondaires ou tertiaires, aliphatiques et/ou cycliques, en particulier les mono, di, tri éthanolamines, les mono et diéthylamines, la cyclohexylamine, la méthylcyclohexylamine...

21. Procédé selon l'une au moins des revendications 1 à 20, **caractérisé en ce que**, la quantité pondérale de l'agent hydrosoluble de stabilisation exprime en % en poids sec/sec dudit agent par rapport à la quantité pondérale de particules pulvérulentes mises en suspension, est comprise entre 0,02% et 5%, et préférentiellement entre 0,1% et 2%.

22. Procédé selon l'une au moins des revendications 1 à 21, **caractérisé en ce que**, la phase aqueuse a une conductivité d'au plus 50 ms et préférentiellement comprise entre 0,2 ms et 40 ms.

23. Procédé selon l'une au moins des revendications 1 à 22 **caractérisée en ce qu'**il est conduit dans au moins un séparateur hydraulique.

24. Procédé selon la revendication 23 **caractérisé en ce que**, quand ledit procédé est conduit dans un seul séparateur hydraulique, la densité « ds » choisie évolue :
- dans le sens croissant, par ajout contrôlé des particules pulvérulentes définies et de l'agent hydrosoluble de stabilisation dans la suspension présente dans ledit séparateur hydraulique, jusqu'à atteindre la nouvelle densité « ds » seuil choisie,
- dans le sens décroissant par ajout d'eau jusqu'à atteindre la nouvelle densité « ds » seuil choisie.

25. Procédé selon la revendication 24 **caractérisé en ce que** l'évolution de la densité de la suspension stable séparative, dans un sens croissant ou décroissant, s'effectue sous une agitation mécanique du milieu aqueux dense en cours de correction et/ou sous recirculation du milieu dense par prélèvement dans le fond du séparateur hydraulique et réinjection au sommet dudit séparateur.

26. Procédé selon la revendication 23 **caractérisé en ce que** dans le cas où ledit procédé est conduit dans plusieurs séparateurs hydrauliques, les divers séparateurs sont placés les uns à la suite des autres, selon un système en cascade fonctionnant avec des suspensions stables ayant chacune un seuil de densité « ds » précis, dans un ordre croissant ou décroissant des densités.

27. Procédé selon l'une quelconque des revendications 23 à 26 **caractérisé en ce que** la densité seuil « ds » de la suspension aqueuse de séparation fine est contrôlée en continu par des moyens appropriés de mesure et soumise à correction dès lors qu'une dérive est perçue.

28. Procédé selon la revendication 27 **caractérisé en ce que** chaque séparateur hydraulique, est piloté quant à la densité du milieu dense qu'il contient au moyen de deux électrovannes s'ouvrant chacune sur deux circuits connectés à deux réservoirs, l'un des réservoirs contenant une suspension « mère » concentrée de particules pulvérulentes, stabilisée en agent hydrosoluble de stabilisation, permettant d'introduire une quantité déterminée de la suspension mère qui corrige vers le haut toute dérive vers un abaissement de la densité du milieu dense de séparation fine, l'autre réservoir contenant de l'eau permettant d'introduire une quantité déterminée d'eau qui corrige vers le bas toute dérive vers une augmentation de la densité du milieu dense de séparation fine.

29. Procédé selon la revendication 28 **caractérisé en ce que** dans chaque séparateur hydraulique, la mesure de la densité du milieu dense se fait en continu par des appareils de mesure adaptés qui déclenchent l'ouverture de l'une ou l'autre des électrovannes puis la fermeture dès lors que le niveau de densité seuil « ds » est atteint.

30. Procédé selon l'une quelconque des revendications 23 à 29 **caractérisé en ce que** chaque suspension dans chaque séparateur hydraulique est soumise à une recirculation par prélèvement de ladite suspension au fond dudit séparateur et réinjection dans la partie supérieure.

31. Utilisation du procédé selon l'une au moins des revendications 1 à 30, à la séparation sélective des matériaux polymères en mélange, en particulier usagés, issus de la destruction d'automobile et/ou de biens de consommation durables en fin de vie.

## Claims

1. Stable density selective separation method with a level of precision of ± 0.0005 in relation to a density level "ds" selected as the density separation threshold at least equal to 1, of each of the constituents of a mixture of synthetic organic materials, particularly used materials and intended for reuse by means of recycling, presented in fragmented form, consisting of performing the separation thereof by means of the difference in density, in an aqueous suspension of pulverulent particles dispersed in a sufficient quantity to create the density level "ds" selected as the separation threshold of at least one of the constituents of the mixture of fragmented synthetic organic materials to be separated selectively, the selective separation suspension used being formed from:
a) dimensionally selected pulverulent solid particles having a grain size of not more than 30 µm, said selected pulverulent solid particles being dispersed in the aqueous phase in a sufficient quantity to create the selected density threshold "ds",
b) a hydrosoluble agent for stabilising the rheological and invariance characteristics of the density "ds" with a level of precision of ± 0.0005 in relation to said density "ds", of said pulverulent solid particle suspension.

2. Method according to claim 1 **characterised in that** the pulverulent solid particles preferentially have a grain size of not more than 20 µm and very preferentially not more than 5 µm, said selected pulverulent solid particles being dispersed in the aqueous phase in a sufficient quantity to create the selected density threshold "ds".

3. Method according to claims 1 or 2 **characterised in that** the pulverulent particles are of natural origin and selected in the group of pulverulent mineral materials consisting of clays, belonging to the families formed by the kaolinite group, comprising kaolinite, dickite, halloysite, disordered kaolinites, serpentines, the mica group, particularly muscovite, biotite and paragonite, pyrophyllite and talc, illites and glauconite, by the montmorillonite group, particularly beidellite, stevensite, saponite, and hectorite; the chlorite group; the vermiculite group; the interstratified clay group wherein the unitary structure is a combination of the above groups; by the fibrous clay group, particularly attapulgite (palygorskite), sepiolite; the group formed by calcium carbonate (calcite), magnesium carbonate, dolomite (double calcium and magnesium carbonate), calcium sulphate dihydrate (gypsum), barium sulphate, talc, alumina, silica, titanium dioxide, zirconium, alone or in a mixture.

4. Method according to claims 1 or 2 **characterised in that** the pulverulent particles are of synthetic origin and are selected in the group consisting of glass powders, precipitated calcium carbonate, metallic powders, alone or in a mixture.

5. Method according to at least one of claims 1 to 4 **characterised in that** the pulverulent particles have a median diameter of not more than 5 µm and preferentially between 1 µm and 0.005 µm.

6. Method according to any of claims 1 to 5 **characterised in that** the hydrosoluble agent for stabilising the rheological and invariance characteristics of the bulk density "ds" of the pulverulent solid particle suspension, is selected in the group consisting of phosphates and polyphosphates, alkylphosphate esters, alkylphosphonate, alkylsulphate, alkylsulphonate, lignin, lignosulphonates in the form of calcium, sodium, sodium, iron, chromium, iron and chromium salts, maleic anhydride and styrene sulphonic acid copolymers, substituted, neutralised, optionally esterified methylacrylamide and (methyl) acrylic acid copolymers, methylacrylamide-alkyl sulphonic acid and (methyl) acrylamide copolymers, hydrosoluble acrylic acid polymers used in acid form or, optionally, partially or totally neutralised by alkaline and/or alkaline earth agents, amines salified by monovalent and/or polyvalent ions, and/or esterified or hydrosoluble acrylic copolymers having phosphated, phosphonated, sulphated, sulphonated functions.

7. Method according to claim 6 **characterised in that** the hydrosoluble stabilisation agent is preferentially selected from hydrosoluble acrylic copolymers, complying with the general formula: 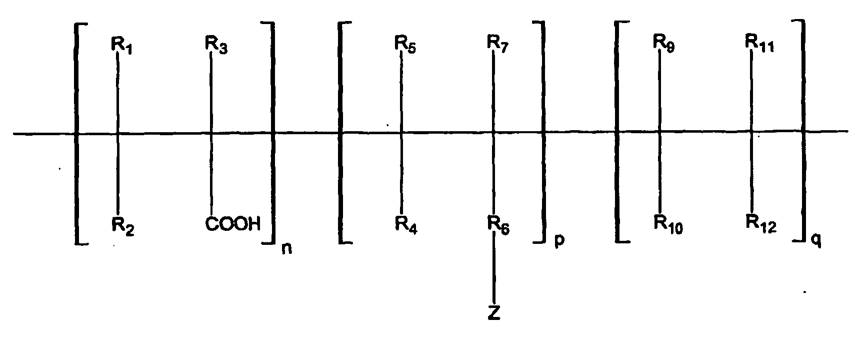
- 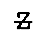 is a phosphate, phosphonate, sulphate, sulphonate unit, having at least one free acid function,
- n takes a value between 0 and 95,
- p takes a value between 95 and 5,
- q takes a value between 0 and 95,
- the total of n+p+q being equal to 100,
- R₁ and R₂ are simultaneously hydrogen or while one is hydrogen, the other is a carboxyl function optionally esterified by a C₁ to C₁₂ alcohol,
- R₃ is hydrogen or a C₁ to C₁₂ alkyl radical,
- R₄ and R₅ are, optionally simultaneously, hydrogen or a C₁ to C₁₂ alkyl radical, an optionally substituted aryl, a carboxyl function optionally esterified by a C₁ to C₁₂ alcohol,
- R₆ is a radical binding the structural unit and the polymer chain, said radical R₆ being an alkylene having the formula (̵CH₂)̵ᵣ wherein r may take the values from the range 1 to 12, an alkylene oxide or polyoxide having the formula (̵R₈-O)̵ₛ wherein R₈ is a C₁ to C₄ alkylene and s may take the values of 1 to 30, or a combination of the two formulas (̵CH₂)̵ᵣ and (̵R₈-O)̵ₛ,
- R₇ is hydrogen or a C₁ to C₁₂ alkyl radical,
- R₉ and R₁₀ are simultaneously hydrogen, or while one is hydrogen, the other is a carboxyl group, a C₁ to C₁₂ ester, a C₁ to C₁₂ alkyl, a C₅ or C₆ aryl, or an alkylaryl,
- R₁₁ is hydrogen, a carboxyl group, a C₁ to C₃ alkyl or a halogen,
- R₁₂ is a C₁ to C₁₂ ester, an optionally substituted amide, a C₁ to C₁₂ alkyl, a C₅ to C₆ aryl, an alkylaryl, a halogen, a carboxyl group or a phosphated, phosphonated, sulphated, sulphonated alkyl or aryl group.

8. Method according to claim 7, **characterised in that**, in the structural unit Z, the non-free acid functions are occupied by a cation, an ammonium group, an amine, a C₁ to C₃ alkyl, an optionally substituted C₃ or C₆ aryl, an alkylaryl, a C₁ to C₁₂, preferentially C₁ to C₃ ester, or a substituted amide.

9. Method according to claim 8, **characterised in that**, in the total n + p + q = 0, when q > 0 and q = 0 when n > 0.

10. Method according to claim 8, **characterised in that**, in the structural units R₁ and R₂, the alcohol esterifying the carboxyl function is preferentially C₁ to C₄.

11. Method according to claim 8, **characterised in that**, in the structural unit R₃, the alkyl radical is preferentially C₁ to C₄.

12. Method according to claim 8, **characterised in that**, in the structural unit R₄ and R₅, the alkyl radical is preferentially C₁ to C₄.

13. Method according to claim 8, **characterised in that**, in the structural units R₄ and R₅, the alcohol esterifying the carboxyl function is preferentially C₁ to C₄.

14. Method according to claim 8, **characterised in that**, in the structural unit R₇, the alkyl radical is preferentially C₁ to C₄.

15. Method according to claim 8, **characterised in that**, in the structural units R₃ and R₁₀, the ester is preferentially C₁ to C₃.

16. Method according to claim 7, **characterised in that**, in the structural units R₉ and R₁₀, the alkyl is preferentially C₁ to C₃.

17. Method according to claim 7, **characterised in that**, in the structural unit R₁₂, the ester is preferentially C₁ to C₅.

18. Method according to claim 7, **characterised in that**, in the structural unit R₁₂, the alkyl is preferentially C₁ to C₃.

19. Method according to claim 7, **characterised in that** the molecular weight of the hydrosoluble acrylic copolymers forming the stabilisation agent is between 5000 and 100,000.

20. Method according to claim 7, **characterised in that** the hydrosoluble acrylic copolymers forming the stabilisation agent are at least partially neutralised, by means of a neutralisation agent selected in the group consisting of sodium, potassium, ammonium, calcium, magnesium hydroxides and primary, secondary or tertiary, aliphatic and/or cyclic amines, particularly mono, di, tri, ethanolamines, mono and diethylamines, cyclohexylamine, methylcyclohexylamine, etc.

21. Method according to at least one of claims 1 to 20, **characterised in that** the quantity by weight of the hydrosoluble stabilisation agent expressed as a % by dry weight of said agent with reference to the quantity by weight of suspended pulverulent particles is between 0.02% and 5% and preferentially between 0.1% and 2%.

22. Method according to at least one of claims 1 to 21, **characterised in that** the aqueous phase has a conductivity of not more than 50 ms and preferentially between 0.2 ms and 40 ms.

23. Method according to at least one of claims 1 to 22 **characterised in that** it is conducted in at least one hydraulic separator.

24. Method according to claim 23 **characterised in that**, when said method is conducted in a single hydraulic separator, the selected density "ds" changes:
- it increases by means of controlled addition of the pulverulent particles defined and the hydrosoluble stabilisation agent in the suspension present in said hydraulic separator, until the new selected threshold density "ds" is reached,
- it decreases by adding water until the new selected threshold density "ds" is reached.

25. Method according to claim 24 **characterised in that** the increasing or decreasing variation of the density of the stable separating suspension is performed under mechanical stirring of the dense aqueous medium being corrected and/or under recirculation of the dense medium by sampling in the bottom of the hydraulic separator and reinjection at the top of said separator.

26. Method according to claim 23 **characterised in that**, if said method is conducted in a plurality of hydraulic separators, the various separators are positioned one following the other, according to a cascade system operating with stable suspensions each having a specific density threshold "ds", in an increasing or decreasing order of densities.

27. Method according to any of claims 23 to 26 **characterised in that** the threshold density "ds" of the aqueous fine separation suspension is controlled continuously by suitable measurement means and subjected to correction as soon as a drift is observed.

28. Method according to claim 27 **characterised in that** each hydraulic separator is controlled with respect to the density of the dense medium contained therein by means of two electrovalves each opening onto two circuits connected to two tanks, one of the tanks containing a concentrated "stock" suspension of pulverulent particles, stabilised in hydrosoluble stabilisation agent, for introducing a predetermined quantity of the stock suspension applying an upward correction of any downward drift of the density of the dense fine separation medium, the other tank containing water for introducing a predetermined quantity of water applying a downward correction of any upward drift of the density of the dense fine separation medium.

29. Method according to claim 28 **characterised in that**, in each hydraulic separator, the density of the dense medium is measured continuously by suitable measurement devices which trigger the opening of one of the electrovalves followed by closure as soon as the threshold density level "ds" is reached.

30. Method according to any of claims 23 to 29 **characterised in that** each suspension in each hydraulic separator is subjected to recirculation by removing said suspension at the bottom of said tank and reinjecting into the top part.

31. Use of the method according to at least one of claims 1 to 30, for the selective separation of polymer materials in a mixture, particularly used materials, from the destruction of motor vehicles and/or durable consumer goods at the end of their service life.

## Patentansprüche

1. Verfahren zur selektiven Trennung jedes der Bestandteile eines Gemenges von insbesondere gebrauchten und durch Recycling stofflich zu verwertenden, in zerkleinerter Form vorliegenden, organischen Synthesematerialien nach stabiler Dichte mit einem Präzisionsniveau von ± 0,0005 in Bezug auf ein als Schwellenwert der Dichtetrennung gewähltes Dichteniveau "ds" von mindestens 1, bei dem die Trennung der Materialien nach ihrer unterschiedlichen Dichte in einer wässrigen Suspension von Pulverteilchen durchgeführt wird, die in geeigneter Menge fein verteilt sind, um das als Schwellenwert für die Trennung wenigstens eines der Bestandteile des Gemenges der selektiv zu trennenden, zerkleinerten, organischen Synthesematerialien gewählte Dichteniveau "ds" zu schaffen, wobei die eingesetzte Suspension zur selektiven Trennung gebildet ist von:
a) nach Größe ausgewählten festen Pulverteilchen mit einer Körnung von höchstens 30 µm, wobei diese ausgewählten festen Pulverteilchen in der wässrigen Phase in ausreichender Menge fein verteilt sind, um die gewählte Schwellendichte "ds" zu schaffen,
b) einem wasserlöslichen Mittel zur Stabilisierung der rheologischen Eigenschaften und Beibehaltung der Dichte "ds" der Suspension fester Pulverteilchen auf dem Präzisionsniveau von ± 0,0005 in Bezug auf die Dichte "ds".

2. Verfahren nach Anspruch 1, **dadurch gekennzeichnet, dass** die festen Pulverteilchen bevorzugt eine Körnung von höchstens 20 µm und besonders bevorzugt von höchstens 5 µm haben, wobei diese ausgewählten festen Pulverteilchen in der wässrigen Phase in ausreichender Menge fein verteilt sind, um die gewählte Schwellendichte "ds" zu schaffen.

3. Verfahren nach Anspruch 1 oder 2, **dadurch gekennzeichnet, dass** die Pulverteilchen natürlicher Herkunft sind und ausgewählt sind aus der Gruppe der pulverförmigen mineralischen Materialien, die aus Tonen besteht und den Mineralfamilien angehört, die ihrerseits bestehen aus der Kaolinit-Gruppe, die Kaolinit, Dickit, Halloysit, ungeordnete Kaolinite, Serpentine umfasst, der Glimmer-Gruppe, insbesondere Muskovit, Biotit und Paragonit, Pyrophyllit und Talk, Illite und Glaukonit, der Montmorillonit-Gruppe, insbesondere Beidellit, Stevensit, Saponit, Hektorit; der Chlorit-Gruppe; der Vermiculit-Gruppe; der Gruppe der zwischengelagerten Tone, deren Einheitsstruktur eine Kombination der vorhergehenden Gruppen ist; der Gruppe der Fasertone, insbesondere Attapulgit (Palygorskit), Sepiolit; der Gruppe gebildet aus Kalziumcarbonat (Kalzit), Magnesiumcarbonat, Dolomit (Kalzium-Magnesium-Doppelkarbonat), Kalziumsulfat-Dihydrat (Gips), Bariumsulfat, Talk, Aluminiumoxid, Siliziumdioxid, Titandioxid, Zirkon, allein genommen oder in Mischung.

4. Verfahren nach Anspruch 1 oder 2, **dadurch gekennzeichnet, dass** die Pulverteilchen synthetischer Herkunft sind und ausgewählt sind aus der Gruppe bestehend aus Glaspulver, ausgefälltem Kalziumcarbonat, Metallpulver, allein genommen oder in Mischung.

5. Verfahren nach wenigstens einem der Ansprüche 1 bis 4, **dadurch gekennzeichnet, dass** die Pulverteilchen einen mittleren Durchmesser von höchstens 5 µm und vorzugsweise 1 µm bis 0,005 µm haben.

6. Verfahren nach einem der Ansprüche 1 bis 5, **dadurch gekennzeichnet, dass** das wasserlösliche Mittel zur Stabilisierung der rheologischen Eigenschaften und Beibehaltung der Scheindichte "ds" der Suspension fester Pulverteilchen ausgewählt ist aus der Gruppe bestehend aus Phosphaten und Polyphosphaten, Alkylphosphatestern, Alkylphosphonaten, Alkylsulfaten, Alkylsulfonaten, Lignin, Lignosulfonaten in Form von Kalzium-, Natrium-, Eisen-, Chrom-, Eisen-Chromsalzen, aus Copolymeren von Maleinsäureanhydrid und Styrolsulfonsäure, gegebenenfalls substituierten, neutralisierten, veresterten Copolymeren von Methylacrylamid und (Methyl)acrylsäure, Copolymeren von Methylacrylamidoalkylsulfonsäure und (Methyl)acrylamid, aus in saurer Form eingesetzten oder gegebenenfalls ganz oder zum Teil mit alkalischen und/oder erdalkalischen Mitteln neutralisierten wasserlöslichen Acrylsäurepolymeren, aus mit ein- und/oder mehrwertigen Ionen Salze bildenden und/oder veresterten Aminen oder aus wasserlöslichen Acrylcopolymeren mit phosphatierenden, phosphonierenden, sulfatierenden, sulfonierenden Funktionen.

7. Verfahren nach Anspruch 6, **dadurch gekennzeichnet, dass** das wasserlösliche Stabilisierungsmittel bevorzugt ausgewählt wird unter den wasserlöslichen Acrylcopolymeren der allgemeinen Formel: 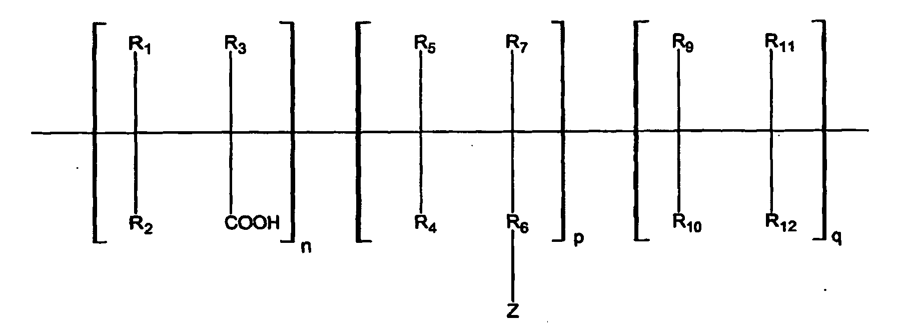
• Z ist eine Phosphat-, Phosphonat-, Sulfat-, Sulfonat-Einheit, die mindestens eine freie Säurefunktion hat,
• n nimmt einen Wert zwischen 0 und 95 an,
• p nimmt einen Wert zwischen 95 und 5 an,
• q nimmt einen Wert zwischen 0 und 95 an,
• die Summe von n + p + q ist gleich 100,
• R₁ und R₂ sind gleichzeitig Wasserstoff bzw. während eins Wasserstoff ist, ist das andere eine mit einem C₁-C₁₂-Alkohol veresterte oder nicht veresterte Carboxylfunktion,
• R₃ ist Wasserstoff oder ein C₁-C₁₂-Alkylrest,
• R₄ und R₅ sind gleichzeitig oder nicht gleichzeitig Wasserstoff oder ein C₁-C₁₂-Alkylrest, ein substituiertes oder nicht substituiertes Aryl, eine mit einem C₁-C₁₂-Alkohol veresterte oder nicht veresterte Carboxylfunktion,
• R₆ ist ein Rest, der die Verbindung zwischen der Einheit Z und der Polymerkette herstellt, wobei dieser Rest R₆ ein Alkylen der Formel (CH₂)ᵣ ist, worin r die Werte des Wertebereichs 1 bis 12 annehmen kann, oder ein Alkylenoxid oder -polyoxid der Formel (R₈-O)ₛ, worin R₈ ein C₁-C₄-Alkylen ist und s die Werte 1 bis 30 annehmen kann, bzw. eine Kombination der beiden Formeln (CH₂), und (R₈-O)ₛ,
• R₇ ist Wasserstoff oder ein C₁-C₁₂-Alkylrest,
• R₉ und R₁₀ sind gleichzeitig Wasserstoff bzw. während eins Wasserstoff ist, ist das andere eine Carboxylgruppe, ein C₁-C₁₂-Ester, ein C₁-C₁₂-Alkyl, ein C₅- oder C₆-Aryl oder ein Alkylaryl,
• R₁₁ ist Wasserstoff, eine Carboxylgruppe, ein C₁-C₃-Alkyl oder ein Halogen,
• R₁₂ ist ein C₁-C₁₂-Ester, ein substituiertes oder nicht substituiertes Amid, ein C₁-C₁₂-Alkyl, ein C₅- oder C₆-Aryl, ein Alkylaryl, ein Halogen, eine Carboxylgruppe bzw. eine phosphatierte, phosphonierte, sulfatierte, sulfonierte Akyl- oder Arylgruppe.

8. Verfahren nach Anspruch 7, **dadurch gekennzeichnet, dass** in der Einheit Z die nicht freien Säurefunktionen belegt sind mit einem Kation, einer Ammoniumgruppe, einem Amin, einem C₁-C₃-Alkyl, einem substituierten oder nicht substituierten C₃- oder C₆-Aryl, einem Alkylaryl, einem C₁-C₁₂-, vorzugsweise C₁-C₃-Ester oder einem substituierten Amid.

9. Verfahren nach Anspruch 8, **dadurch gekennzeichnet, dass** in der Summe n + p + q n gleich 0 ist, wenn q > 0, und q gleich 0 ist, wenn n > 0.

10. Verfahren nach Anspruch 8, **dadurch gekennzeichnet, dass** in den Einheiten R₁ und R₂ der die Carboxylfunktion veresternde Alkohol vorzugweise ein C₁-C₄-Alkohol ist.

11. Verfahren nach Anspruch 8, **dadurch gekennzeichnet, dass** in der Einheit R₃ der Alkylrest vorzugsweise ein C₁-C₄-Alkylrest ist.

12. Verfahren nach Anspruch 8, **dadurch gekennzeichnet, dass** in den Einheiten R₄ und R₅ der Alkylrest vorzugsweise ein C₁-C₄-Alkylrest ist.

13. Verfahren nach Anspruch 8, **dadurch gekennzeichnet, dass** in den Einheiten R₄ und R₅ der die Carboxylfunktion veresternde Alkohol vorzugsweise ein C₁-C₄-Alkohol ist.

14. Verfahren nach Anspruch 8, **dadurch gekennzeichnet, dass** in der Einheit R₇ der Alkylrest vorzugsweise ein C₁-C₄-Alkylrest ist.

15. Verfahren nach Anspruch 8, **dadurch gekennzeichnet, dass** in den Einheiten R₅ und R₁₀ der Ester vorzugsweise ein C₁-C₃-Ester ist.

16. Verfahren nach Anspruch 7, **dadurch gekennzeichnet, dass** in den Einheiten R₉ und R₁₀ das Alkyl vorzugsweise ein C₁-C₃-Alkyl ist.

17. Verfahren nach Anspruch 7, **dadurch gekennzeichnet, dass** in der Einheit R₁₂ der Ester vorzugsweise ein C₁-C₅-Ester ist.

18. Verfahren nach Anspruch 7, **dadurch gekennzeichnet, dass** in der Einheit R₁₂ das Alkyl vorzugsweise ein C₁-C₃-Alkyl ist.

19. Verfahren nach Anspruch 7, **dadurch gekennzeichnet, dass** die Molekülmasse der das Stabilisierungsmittel bildenden wasserlöslichen Acrylcopolymere zwischen 5 000 und 100 000 liegt.

20. Verfahren nach Anspruch 7, **dadurch gekennzeichnet, dass** die das Stabilisierungsmittel bildenden wasserlöslichen Acrylcopolymere zumindest teilweise mit einem Neutralisierungsmittel neutralisiert werden, ausgewählt aus der Gruppe bestehend aus Natrium-, Kalium-, Ammonium-, Kalzium-, Magnesiumhydroxiden und primären, sekundären oder tertiären aliphatischen und/oder zyklischen Aminen, insbesondere Mono-, Di-, Triethanolaminen, Mono- und Diethylaminen, Cyclohexylamin, Methylcyclohexylamin...

21. Verfahren nach wenigstens einem der Ansprüche 1 bis 20, **dadurch gekennzeichnet, dass** die Gewichtsmenge des wasserlöslichen Stabilisierungsmittels, ausgedrückt in Trockengewichtsprozent des Mittels, bezogen auf die Gewichtsmenge an suspendierten Pulverteilchen zwischen 0,02 % und 5 % und vorzugsweise zwischen 0,1 % und 2 % liegt.

22. Verfahren nach wenigstens einem der Ansprüche 1 bis 21, **dadurch gekennzeichnet, dass** die wässrige Phase eine Leitfähigkeit von höchstens 50 ms und vorzugsweise zwischen 0,2 ms und 40 ms hat.

23. Verfahren nach wenigstens einem der Ansprüche 1 bis 22, **dadurch gekennzeichnet, dass** es in mindestens einem Hydroabscheider durchgeführt wird.

24. Verfahren nach Anspruch 23, **dadurch gekennzeichnet, dass** bei Durchführung des Verfahrens in nur einem Hydroabscheider die gewählte Dichte "ds" sich verändert:
- in aufsteigender Richtung durch kontrollierte Zugabe der definierten Pulverteilchen und des wasserlöslichen Stabilisierungsmittels zu der in dem Hydroabscheider vorliegenden Suspension, bis die gewählte neue Schwellendichte "ds" erreicht ist,
- in absteigender Richtung durch Zugabe von Wasser, bis die gewählte neue Schwellendichte "ds" erreicht ist.

25. Verfahren nach Anspruch 24, **dadurch gekennzeichnet, dass** die Veränderung der Dichte der stabilen Trennsuspension in aufsteigender oder absteigender Richtung unter mechanischem Rühren des dichten wässrigen Mediums im Laufe der Korrektur und/oder unter Umwälzen des dichten Mediums durch Entnahme im Bodenbereich des Hydroabscheiders und Wiedereinleitung am oberen Ende des Abscheiders erfolgt.

26. Verfahren nach Anspruch 23, **dadurch gekennzeichnet, dass** bei Durchführung des Verfahrens in mehreren Hydroabscheidern die einzelnen Abscheider hintereinander in einem Kaskadensystem angeordnet sind, das mit stabilen Suspensionen arbeitet, die jeweils eine präzise Schwellendichte "ds" in aufsteigender oder absteigender Reihenfolge der Dichten haben.

27. Verfahren nach irgendeinem der Ansprüche 23 bis 26, **dadurch gekennzeichnet, dass** die Schwellendichte "ds" der wässrigen Suspension zur feinen Trennung mit geeigneten Messmitteln kontinuierlich kontrolliert und bei Erkennung einer Veränderung korrigiert wird.

28. Verfahren nach Anspruch 27, **dadurch gekennzeichnet, dass** jeder Hydroabscheider hinsichtlich der Dichte des darin enthaltenden dichten Mediums mit zwei Magnetventilen gesteuert wird, die jeweils an zwei Stromkreisen, die an zwei Behälter angeschlossen sind, öffnen, wobei einer der Behälter eine konzentrierte, mit dem wasserlöslichen Stabilisierungsmittel stabilisierte, sog. Muttersuspension von Pulverteilchen enthält, so dass eine bestimmte Menge der Muttersuspension eingeleitet werden kann, die jegliche Veränderung in Richtung Absenkung der Dichte des dichten Mediums zur feinen Trennung nach oben korrigiert, und der andere Behälter Wasser enthält, so dass eine bestimmte Menge Wasser eingeleitet werden kann, die jegliche Veränderung in Richtung Erhöhung der Dichte des dichten Mediums zur feinen Trennung nach unten korrigiert.

29. Verfahren nach Anspruch 28, **dadurch gekennzeichnet, dass** in jedem Hydroabscheider die Messung der Dichte des dichten Mediums kontinuierlich mit geeigneten Messgeräten erfolgt, die das Öffnen des einen oder anderen Magnetventils und das Schließen veranlassen, sobald das Niveau der Schwellendichte "ds" erreicht ist.

30. Verfahren nach irgendeinem der Ansprüche 23 bis 29, **dadurch gekennzeichnet, dass** jede Suspension in jedem Hydroabscheider durch Entnahme der Suspension am Boden des Abscheiders und Wiedereinleitung in den oberen Teil umgewälzt wird.

31. Verwendung des Verfahrens nach wenigstens einem der Ansprüche 1 bis 30 bei der selektiven Trennung vermengter, insbesondere gebrauchter Polymermaterialien aus der Vernichtung von Kraftfahrzeugen und/oder ausgedienten Dauerkonsumgütern.
